# EUROPEAN PATENT APPLICATION

(11) **EP 4 645 739 A1**
(43) Date of publication of application: **05.11.2025**
(21) Application number: 24759784.2
(22) Date of filing: 23.02.2024
(51) Int. Cl.: H04L 5/00, G01S 13/02

(54) **INFORMATION TRANSMISSION METHOD AND APPARATUS**

(30) Priority: 24.02.2023 CN 202310212079
(71) Applicant: Huawei Technologies Co., Ltd., Shenzhen, Guangdong 518129 (CN)
(72) Inventor: HUANG, Lei, Shenzhen, Guangdong 518129 (CN); WU, Kuan, Shenzhen, Guangdong 518129 (CN); CHITRAKAR, Rojan, Shenzhen, Guangdong 518129 (CN); LI, Yunbo, Shenzhen, Guangdong 518129 (CN); YANG, Xun, Shenzhen, Guangdong 518129 (CN)
(74) Representative: Grünecker Patent- und Rechtsanwälte PartG mbB
(86) International application number: PCT/CN2024/078388
(87) International publication number: WO 2024/175112

(57) **Abstract**

This application provides an information transmission method and an apparatus, to reduce interference between networks, and relates to the field of wireless communication technologies. In the method, a first apparatus may receive a first data packet, where the first data packet includes first information and second information. The first information indicates at least one ranging block occupied by a session corresponding to the first information, the second information indicates that the first information is associated with a plurality of ranging blocks, and the plurality of ranging blocks include the at least one ranging block. The first apparatus may determine, on the plurality of ranging blocks based on the first information, the ranging block occupied by the session. According to this solution, the first information associated with the plurality of ranging blocks indicates the at least one ranging block occupied by the session, and the first apparatus may determine, on the plurality of ranging blocks, the ranging block occupied by the session, so that the occupied ranging block can be avoided during ranging, to reduce interference.

## Description

### CROSS-REFERENCE TO RELATED APPLICATIONS

This application claims priority to Chinese Patent Application No. 202310212079.3, filed with the China National Intellectual Property Administration on February 24, 2023 and entitled "INFORMATION TRANSMISSION METHOD AND APPARATUS", which is incorporated herein by reference in its entirety.

### TECHNICAL FIELD

This application relates to the field of wireless communication technologies, and in particular, to an information transmission method and an apparatus.

### BACKGROUND

An ultra-wideband (ultra-wideband, UWB) technology can provide very accurate ranging, positioning, sensing, and data communication capabilities and has an excellent coexistence feature, and therefore has been widely used in various consumer electronic devices such as mobile phones and wearable devices. In a scenario in which UWB networks are densely deployed, a UWB channel usage coordination mechanism can effectively reduce interference between the UWB networks.

For example, a ranging initiator of UWB network 1 can broadcast a data packet before each session starts. The data packet can carry information about the session of UWB network 1, for example, ranging block duration, ranging round duration, a UWB channel, and a preamble code. Before initiating ranging, a ranging initiator of UWB network 2 scans the data packet broadcast by the ranging initiator of UWB network 1. Because the data packet carries the information about the session of UWB network 1, the ranging initiator of UWB network 2 can determine specific ranging rounds of a ranging block that are occupied by the session of UWB network 1. When initiating ranging, the ranging initiator of UWB network 2 can use a ranging block or a ranging round that is not occupied by the session of UWB network 1, to reduce interference between networks.

The UWB channel usage coordination mechanism can determine specific ranging rounds of a ranging block that are occupied by a session, but cannot determine all resources occupied by the session. Consequently, interference still exists between the networks.

### SUMMARY

This application provides an information transmission method and an apparatus, to reduce interference between networks.

According to a first aspect, an information transmission method is provided. The method may be performed by a first apparatus. The first apparatus may be a communication device or a chip/chip system. In the method, the first apparatus may receive a first data packet, where the first data packet includes first information and second information. The first information indicates at least one ranging block occupied by a session corresponding to the first information, the second information indicates that the first information is associated with a plurality of ranging blocks, and the plurality of ranging blocks include the at least one ranging block. The first apparatus may determine, on the plurality of ranging blocks based on the first information, the ranging block occupied by the session.

According to this solution, the first information associated with the plurality of ranging blocks indicates the at least one ranging block occupied by the session, and the first apparatus may determine, on the plurality of ranging blocks, the ranging block occupied by the session, so that the occupied ranging block can be avoided during ranging, to reduce interference.

In a possible implementation, the first apparatus may receive third information, where the third information indicates one or more of the following: indication information indicating whether the first data packet is periodically broadcast, and a time interval between a receiving moment of the third information and a second data packet. A sending moment of the second data packet is later than a sending moment of the first data packet.

According to this solution, the first apparatus may determine, based on the third information, whether the first data packet is periodically broadcast. The third information may further indicate a receiving moment of a next data packet, so that scanning frequency of the first apparatus can be reduced, and power consumption of the first apparatus can be reduced.

In a possible implementation, the first information includes configuration information of multi-millisecond ultra-wideband technology (multi-millisecond ultra-wideband, MMS-UWB) ranging, and the configuration information includes one or more of the following: a quantity of repetitions of a multi-millisecond ultra-wideband sequence (multi-millisecond reference signal, MMRS), a quantity of ranging sequence fragments (ranging sequence fragments, RSFs), a quantity of ranging integrity fragments (ranging integrity fragments, RIFs), an MMRS sequence index, and a gap size. The quantity of repetitions of the MMRS indicates a quantity of repetitions of an MMRS sequence used for the session, the MMRS sequence index indicates an index of the MMRS sequence used for the session, and the gap size indicates a gap size between MMRS sequences used for the session.

According to the foregoing solution, the first information may further indicate the configuration information of MMS-UWB ranging, and therefore may be used in an MMS-UWB ranging technology.

In a possible implementation, the second information further indicates a type of the first information, and the type of the first information includes one or more of the following:
1. First type: The first information includes duration of the plurality of ranging blocks. According to this solution, first information of the first type may carry minimum session information, so that signaling overheads of the first information can be reduced.
2. Second type: The first information includes one or more of the following: a ranging block index, first indication information, second indication information, a first time interval, a quantity of one or more ranging rounds occupied by a session, an index of the one or more ranging rounds occupied by the session, and duration of one ranging round in the one or more ranging rounds occupied by the session, where the one or more ranging rounds are included in a ranging block corresponding to the ranging block index.

The first indication information indicates whether the ranging block corresponding to the ranging block index is a first ranging block used for the session, the second indication information indicates whether the ranging block corresponding to the ranging block index is a last ranging block used for the session, and the first time interval indicates a time interval between a receiving moment of the first data packet and a start moment of a first ranging round occupied by the session.

Based on first information of the second type, a first device may determine detailed information of each ranging block occupied by the session, so that the first device can be prevented from continuing to scan subsequent control information, to reduce overheads of the first device.

3. Third type: The first information includes one or more of the following: a ranging block index, first indication information, second indication information, a second time interval, a quantity of one or more ranging rounds occupied by a session, an index of the one or more ranging rounds occupied by the session, and duration of one ranging round in the one or more ranging rounds occupied by the session, where the one or more ranging rounds are included in a ranging block corresponding to the ranging block index.

The first indication information indicates whether the ranging block corresponding to the ranging block index is a first ranging block used for the session, and the second indication information indicates whether the ranging block corresponding to the ranging block index is a last ranging block used for the session. The second time interval indicates a time interval between a receiving moment of the first data packet and a start moment of the ranging block corresponding to the ranging block index.

Based on first information of the third type, a first device may determine detailed information of each ranging block occupied by the session, so that the first device can be prevented from continuing to scan subsequent control information, to reduce overheads of the first device. Compared with the first information of the second type, the first information of the third type may indicate inconsecutive ranging rounds.

In a possible implementation, the second information further indicates a type of the first information, and the type of the first information includes one or more of the following:
(1) First type: The first information includes duration of the plurality of ranging blocks.
(2) Second type: The first information includes one or more of the following: a quantity of ranging blocks occupied by a session, indexes of M ranging blocks occupied by the session, a quantity of one or more ranging rounds occupied by the session, indexes of the one or more ranging rounds occupied by the session, and duration of one ranging round in the one or more ranging rounds occupied by the session. An m^{th} time interval indicates a time interval between a receiving moment of the first data packet and a start moment of a first ranging round occupied by the session included in an m^{th} ranging block in the M ranging blocks.
   The one or more ranging rounds are included in the m^{th} ranging block in the M ranging blocks, m is an integer greater than or equal to 1 and less than or equal to M, M is an integer greater than or equal to 1, and the plurality of ranging blocks include the M ranging blocks. Based on first information of the second type, information about all ranging blocks occupied by the session may be indicated.
(3) Third type: The first information includes one or more of the following: a quantity of ranging blocks occupied by a session, indexes of M ranging blocks occupied by the session, a quantity of one or more ranging rounds occupied by the session, indexes of the one or more ranging rounds occupied by the session, and duration of one ranging round in the one or more ranging rounds occupied by the session.

A third time interval indicates a time interval between a receiving moment of the first data packet and a start moment of the plurality of ranging blocks, the one or more ranging rounds are included in an m^{th} ranging block in the M ranging blocks, m is an integer greater than or equal to 1 and less than or equal to M, M is an integer greater than or equal to 1, and the plurality of ranging blocks include the M ranging blocks. Based on first information of the third type, information about all ranging blocks occupied by the session may be indicated. Compared with the first information of the second type, the first information of the third type may indicate inconsecutive ranging rounds.

In a possible implementation, the first data packet is periodically transmitted, and a cycle of the first data packet is time occupied by the plurality of ranging blocks. Alternatively, the first data packet is aperiodically transmitted, and the sending moment of the first data packet is determined based on a start moment of each of the plurality of ranging blocks.

According to the foregoing solution, a second apparatus may periodically broadcast the first data packet, to reduce interference. Alternatively, the second apparatus may aperiodically broadcast the first data packet, so that energy consumption of the second apparatus can be reduced.

In a possible implementation, the third information is included in the first data packet. Alternatively, the third information is broadcast by using out-of-band signaling.

In a possible implementation, the second information further indicates that the first information is associated with one ranging block, and the first information indicates one ranging block occupied by the session.

According to a second aspect, an information transmission method is provided. The method may be performed by a second apparatus. The second apparatus may be a communication device or a chip/chip system. In the method, the second apparatus generates a first data packet, where the first data packet includes first information and second information. The first information indicates at least one ranging block occupied by a session corresponding to the first information, the second information indicates that the first information is associated with a plurality of ranging blocks, and the plurality of ranging blocks include the at least one ranging block. The second apparatus sends the first data packet.

In a possible implementation, the second apparatus sends third information, where the third information indicates one or more of the following: indication information indicating whether the first data packet is periodically broadcast, and a time interval between a receiving moment of the third information and a second data packet. A sending moment of the second data packet is later than a sending moment of the first data packet.

In a possible implementation, the first information includes configuration information of MMS-UWB ranging, and the configuration information includes one or more of the following: a quantity of repetitions of an MMRS, a quantity of RSFs, a quantity of RIFs, an MMRS sequence index, and a gap size. The quantity of repetitions of the MMRS indicates a quantity of repetitions of an MMRS sequence used for the session, the MMRS sequence index indicates an index of the MMRS sequence used for the session, and the gap size indicates a gap size between MMRS sequences used for the session.

In a possible implementation, the second information further indicates a type of the first information, and the type of the first information includes one or more of the following:
1. First type: The first information includes duration of the plurality of ranging blocks.
2. Second type: The first information includes one or more of the following: a ranging block index, first indication information, second indication information, a first time interval, a quantity of one or more ranging rounds occupied by a session, an index of the one or more ranging rounds occupied by the session, and duration of one ranging round in the one or more ranging rounds occupied by the session, where the one or more ranging rounds are included in a ranging block corresponding to the ranging block index.
   The first indication information indicates whether the ranging block corresponding to the ranging block index is a first ranging block used for the session, the second indication information indicates whether the ranging block corresponding to the ranging block index is a last ranging block used for the session, and the first time interval indicates a time interval between a receiving moment of the first data packet and a start moment of a first ranging round occupied by the session.
3. Third type: The first information includes one or more of the following: a ranging block index, first indication information, second indication information, a second time interval, a quantity of one or more ranging rounds occupied by a session, an index of the one or more ranging rounds occupied by the session, and duration of one ranging round in the one or more ranging rounds occupied by the session, where the one or more ranging rounds are included in a ranging block corresponding to the ranging block index.

The first indication information indicates whether the ranging block corresponding to the ranging block index is a first ranging block used for the session, and the second indication information indicates whether the ranging block corresponding to the ranging block index is a last ranging block used for the session. The second time interval indicates a time interval between a receiving moment of the first data packet and a start moment of the ranging block corresponding to the ranging block index.

In a possible implementation, the second information further indicates a type of the first information, and the type of the first information includes one or more of the following:
(1) First type: The first information includes duration of the plurality of ranging blocks.
(2) Second type: The first information includes one or more of the following: a quantity of ranging blocks occupied by a session, indexes of M ranging blocks occupied by the session, a quantity of one or more ranging rounds occupied by the session, indexes of the one or more ranging rounds occupied by the session, and duration of one ranging round in the one or more ranging rounds occupied by the session. An m^{th} time interval indicates a time interval between a receiving moment of the first data packet and a start moment of a first ranging round occupied by the session included in an m^{th} ranging block in the M ranging blocks.
   The one or more ranging rounds are included in the m^{th} ranging block in the M ranging blocks, m is an integer greater than or equal to 1 and less than or equal to M, M is an integer greater than or equal to 1, and the plurality of ranging blocks include the M ranging blocks.
(3) Third type: The first information includes one or more of the following: a quantity of ranging blocks occupied by a session, indexes of M ranging blocks occupied by the session, a quantity of one or more ranging rounds occupied by the session, indexes of the one or more ranging rounds occupied by the session, and duration of one ranging round in the one or more ranging rounds occupied by the session.

A third time interval indicates a time interval between a receiving moment of the first data packet and a start moment of the plurality of ranging blocks, the one or more ranging rounds are included in an m^{th} ranging block in the M ranging blocks, m is an integer greater than or equal to 1 and less than or equal to M, M is an integer greater than or equal to 1, and the plurality of ranging blocks include the M ranging blocks.

In a possible implementation, the first data packet is periodically transmitted, and a cycle of the first data packet is time occupied by the plurality of ranging blocks. Alternatively, the first data packet is aperiodically transmitted, and the sending moment of the first data packet is determined based on a start moment of each of the plurality of ranging blocks.

In a possible implementation, the third information is included in the first data packet. Alternatively, the third information is broadcast by using out-of-band signaling.

In a possible implementation, the second information further indicates that the first information is associated with one ranging block, and the first information indicates one ranging block occupied by the session.

According to a third aspect, a communication apparatus is provided, including a processing unit and a transceiver unit.

The transceiver unit is configured to receive a first data packet, where the first data packet includes first information and second information. The first information indicates at least one ranging block occupied by a session corresponding to the first information, the second information indicates that the first information is associated with a plurality of ranging blocks, and the plurality of ranging blocks include the at least one ranging block. The processing unit is configured to determine, on the plurality of ranging blocks based on the first information, the ranging block occupied by the session.

In a possible implementation, the transceiver unit is further configured to receive third information, where the third information indicates one or more of the following: indication information indicating whether the first data packet is periodically broadcast, and a time interval between a receiving moment of the third information and a second data packet. A sending moment of the second data packet is later than a sending moment of the first data packet.

In a possible implementation, the first information includes configuration information of MMS-UWB ranging, and the configuration information includes one or more of the following: a quantity of repetitions of an MMRS, a quantity of RSFs, a quantity of RIFs, an MMRS sequence index, and a gap size. The quantity of repetitions of the MMRS indicates a quantity of repetitions of an MMRS sequence used for the session, the MMRS sequence index indicates an index of the MMRS sequence used for the session, and the gap size indicates a gap size between MMRS sequences used for the session.

In a possible implementation, the second information further indicates a type of the first information, and the type of the first information includes one or more of the following:
1. First type: The first information includes duration of the plurality of ranging blocks.
2. Second type: The first information includes one or more of the following: a ranging block index, first indication information, second indication information, a first time interval, a quantity of one or more ranging rounds occupied by a session, an index of the one or more ranging rounds occupied by the session, and duration of one ranging round in the one or more ranging rounds occupied by the session, where the one or more ranging rounds are included in a ranging block corresponding to the ranging block index.
   The first indication information indicates whether the ranging block corresponding to the ranging block index is a first ranging block used for the session, the second indication information indicates whether the ranging block corresponding to the ranging block index is a last ranging block used for the session, and the first time interval indicates a time interval between a receiving moment of the first data packet and a start moment of a first ranging round occupied by the session.
3. Third type: The first information includes one or more of the following: a ranging block index, first indication information, second indication information, a second time interval, a quantity of one or more ranging rounds occupied by a session, an index of the one or more ranging rounds occupied by the session, and duration of one ranging round in the one or more ranging rounds occupied by the session, where the one or more ranging rounds are included in a ranging block corresponding to the ranging block index.

The first indication information indicates whether the ranging block corresponding to the ranging block index is a first ranging block used for the session, and the second indication information indicates whether the ranging block corresponding to the ranging block index is a last ranging block used for the session. The second time interval indicates a time interval between a receiving moment of the first data packet and a start moment of the ranging block corresponding to the ranging block index.

In a possible implementation, the second information further indicates a type of the first information, and the type of the first information includes one or more of the following:
(1) First type: The first information includes duration of the plurality of ranging blocks.
(2) Second type: The first information includes one or more of the following: a quantity of ranging blocks occupied by a session, indexes of M ranging blocks occupied by the session, a quantity of one or more ranging rounds occupied by the session, indexes of the one or more ranging rounds occupied by the session, and duration of one ranging round in the one or more ranging rounds occupied by the session. An m^{th} time interval indicates a time interval between a receiving moment of the first data packet and a start moment of a first ranging round occupied by the session included in an m^{th} ranging block in the M ranging blocks.
   The one or more ranging rounds are included in the m^{th} ranging block in the M ranging blocks, m is an integer greater than or equal to 1 and less than or equal to M, M is an integer greater than or equal to 1, and the plurality of ranging blocks include the M ranging blocks.
(3) Third type: The first information includes one or more of the following: a quantity of ranging blocks occupied by a session, indexes of M ranging blocks occupied by the session, a quantity of one or more ranging rounds occupied by the session, indexes of the one or more ranging rounds occupied by the session, and duration of one ranging round in the one or more ranging rounds occupied by the session.

A third time interval indicates a time interval between a receiving moment of the first data packet and a start moment of the plurality of ranging blocks, the one or more ranging rounds are included in an m^{th} ranging block in the M ranging blocks, m is an integer greater than or equal to 1 and less than or equal to M, M is an integer greater than or equal to 1, and the plurality of ranging blocks include the M ranging blocks.

In a possible implementation, the first data packet is periodically transmitted, and a cycle of the first data packet is time occupied by the plurality of ranging blocks. Alternatively, the first data packet is aperiodically transmitted, and the sending moment of the first data packet is determined based on a start moment of each of the plurality of ranging blocks.

In a possible implementation, the third information is included in the first data packet. Alternatively, the third information is broadcast by using out-of-band signaling.

In a possible implementation, the second information further indicates that the first information is associated with one ranging block, and the first information indicates one ranging block occupied by the session.

According to a fourth aspect, a communication apparatus is provided, including a processing unit and a transceiver unit.

The processing unit is configured to generate a first data packet, where the first data packet includes first information and second information. The first information indicates at least one ranging block occupied by a session corresponding to the first information, the second information indicates that the first information is associated with a plurality of ranging blocks, and the plurality of ranging blocks include the at least one ranging block. The transceiver unit is configured to send the first data packet.

In a possible implementation, the transceiver unit is further configured to send third information, where the third information indicates one or more of the following: indication information indicating whether the first data packet is periodically broadcast, and a time interval between a receiving moment of the third information and a second data packet. A sending moment of the second data packet is later than a sending moment of the first data packet.

In a possible implementation, the first information includes configuration information of MMS-UWB ranging, and the configuration information includes one or more of the following: a quantity of repetitions of an MMRS, a quantity of RSFs, a quantity of RIFs, an MMRS sequence index, and a gap size. The quantity of repetitions of the MMRS indicates a quantity of repetitions of an MMRS sequence used for the session, the MMRS sequence index indicates an index of the MMRS sequence used for the session, and the gap size indicates a gap size between MMRS sequences used for the session.

In a possible implementation, the second information further indicates a type of the first information, and the type of the first information includes one or more of the following:
1. First type: The first information includes duration of the plurality of ranging blocks.
2. Second type: The first information includes one or more of the following: a ranging block index, first indication information, second indication information, a first time interval, a quantity of one or more ranging rounds occupied by a session, an index of the one or more ranging rounds occupied by the session, and duration of one ranging round in the one or more ranging rounds occupied by the session, where the one or more ranging rounds are included in a ranging block corresponding to the ranging block index.
   The first indication information indicates whether the ranging block corresponding to the ranging block index is a first ranging block used for the session, the second indication information indicates whether the ranging block corresponding to the ranging block index is a last ranging block used for the session, and the first time interval indicates a time interval between a receiving moment of the first data packet and a start moment of a first ranging round occupied by the session.
3. Third type: The first information includes one or more of the following: a ranging block index, first indication information, second indication information, a second time interval, a quantity of one or more ranging rounds occupied by a session, an index of the one or more ranging rounds occupied by the session, and duration of one ranging round in the one or more ranging rounds occupied by the session, where the one or more ranging rounds are included in a ranging block corresponding to the ranging block index.

The first indication information indicates whether the ranging block corresponding to the ranging block index is a first ranging block used for the session, and the second indication information indicates whether the ranging block corresponding to the ranging block index is a last ranging block used for the session. The second time interval indicates a time interval between a receiving moment of the first data packet and a start moment of the ranging block corresponding to the ranging block index.

In a possible implementation, the second information further indicates a type of the first information, and the type of the first information includes one or more of the following:
(1) First type: The first information includes duration of the plurality of ranging blocks.
(2) Second type: The first information includes one or more of the following: a quantity of ranging blocks occupied by a session, indexes of M ranging blocks occupied by the session, a quantity of one or more ranging rounds occupied by the session, indexes of the one or more ranging rounds occupied by the session, and duration of one ranging round in the one or more ranging rounds occupied by the session. An m^{th} time interval indicates a time interval between a receiving moment of the first data packet and a start moment of a first ranging round occupied by the session included in an m^{th} ranging block in the M ranging blocks.
   The one or more ranging rounds are included in the m^{th} ranging block in the M ranging blocks, m is an integer greater than or equal to 1 and less than or equal to M, M is an integer greater than or equal to 1, and the plurality of ranging blocks include the M ranging blocks.
(3) Third type: The first information includes one or more of the following: a quantity of ranging blocks occupied by a session, indexes of M ranging blocks occupied by the session, a quantity of one or more ranging rounds occupied by the session, indexes of the one or more ranging rounds occupied by the session, and duration of one ranging round in the one or more ranging rounds occupied by the session.

A third time interval indicates a time interval between a receiving moment of the first data packet and a start moment of the plurality of ranging blocks, the one or more ranging rounds are included in an m^{th} ranging block in the M ranging blocks, m is an integer greater than or equal to 1 and less than or equal to M, M is an integer greater than or equal to 1, and the plurality of ranging blocks include the M ranging blocks.

In a possible implementation, the first data packet is periodically transmitted, and a cycle of the first data packet is time occupied by the plurality of ranging blocks. Alternatively, the first data packet is aperiodically transmitted, and the sending moment of the first data packet is determined based on a start moment of each of the plurality of ranging blocks.

In a possible implementation, the third information is included in the first data packet. Alternatively, the third information is broadcast by using out-of-band signaling.

In a possible implementation, the second information further indicates that the first information is associated with one ranging block, and the first information indicates one ranging block occupied by the session.

According to a fifth aspect, a communication apparatus is provided. The communication apparatus may be the communication apparatus according to any one of the third aspect or the fourth aspect or the possible implementations of the third aspect or the fourth aspect in the foregoing embodiments, or a chip disposed in the communication apparatus according to any one of the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first apparatus in any possible implementation of the first aspect, or the communication apparatus is enabled to perform the method performed by the second apparatus in any possible implementation of the second aspect.

It should be understood that the communication interface may be implemented by using an antenna, a feeder, a codec, or the like in the communication apparatus. Alternatively, if the communication apparatus is a chip disposed in the first apparatus or the second apparatus, the communication interface may be an input/output interface of the chip, for example, an input/output pin. The communication apparatus may further include a transceiver, used by the communication apparatus to communicate with another device.

According to a sixth aspect, an embodiment of this application provides a chip system. The chip system includes a processor, and may further include a memory, configured to implement the method performed by the first apparatus or the second apparatus in any one of the possible implementations of the first aspect to the fourth aspect. In a possible implementation, the chip system further includes a memory, configured to store program instructions and/or data. The chip system may include a chip, or may include a chip and another discrete component.

According to a seventh aspect, this application provides a computer-readable storage medium. The computer-readable storage medium stores a computer program or instructions. When the computer program or the instructions are run, the method performed by the first apparatus or the second apparatus in the foregoing aspects is implemented.

According to an eighth aspect, a computer program product is provided. The computer program product includes computer program code or instructions. When the computer program code or the instructions are run, the method performed by the first apparatus or the second apparatus in the foregoing aspects is implemented.

According to a ninth aspect, a communication apparatus is provided. The communication apparatus includes units or modules that perform the methods in the foregoing aspects.

According to a tenth aspect, a chip system is provided, including a logic circuit and an input/output interface. The logic circuit is configured to perform the method performed by the first apparatus or the second apparatus. The input/output interface is used to communicate with another apparatus.

For beneficial effects of the second aspect to the tenth aspect and the implementations of the second aspect to the tenth aspect, refer to descriptions of beneficial effects of the method in the first aspect and the implementations of the first aspect.

### BRIEF DESCRIPTION OF DRAWINGS

FIG. 1 is a diagram of a hyper block time structure according to an embodiment of this application;
FIG. 2 is a diagram of a communication system according to an embodiment of this application;
FIG. 3 is a diagram of a UWB channel usage coordination mechanism;
FIG. 4 is an example flowchart of an information transmission method according to an embodiment of this application;
FIG. 5 is a diagram of a method for sending a first data packet according to an embodiment of this application;
FIG. 6 is a diagram of another method for sending a first data packet according to an embodiment of this application;
FIG. 7 is a diagram of a communication apparatus according to an embodiment of this application;
FIG. 8 is a diagram of another communication apparatus according to an embodiment of this application;
FIG. 9 is a diagram of still another communication apparatus according to an embodiment of this application; and
FIG. 10 is a diagram of yet another communication apparatus according to an embodiment of this application.

### DESCRIPTION OF EMBODIMENTS

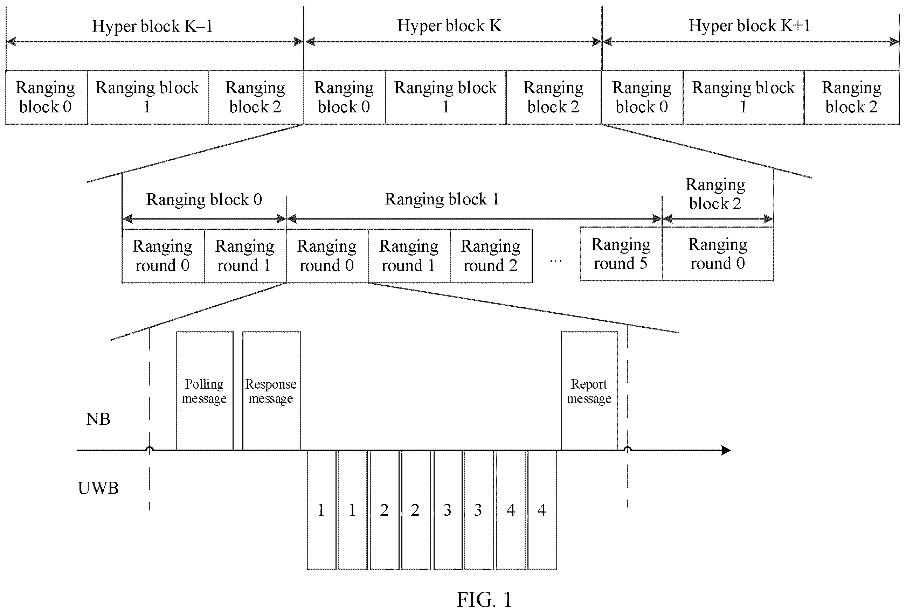

For ease of understanding of the technical solutions provided in embodiments of this application, the following describes technical terms used in embodiments of this application.
(1) Hyper block, including one or more ranging blocks (ranging blocks) that may have different duration.
   A hyper block (hyper block)-based time structure is a good method for implementing efficient utilization of slot resources in a multi-millisecond ultra-wideband (multi-millisecond ultra-wideband, MMS-UWB) ranging technology. FIG. 1 is a diagram of an example of a hyper block-based time structure. In this example, each hyper block may include three ranging blocks, and each ranging block may have different quantities of ranging rounds (ranging rounds). Ranging block 0 has two ranging rounds for one-to-one MMS-UWB ranging (one-to-one ranging), which are respectively ranging round 0 and ranging round 1. Ranging block 1 has six ranging rounds for one-to-one MMS-UWB ranging, which are respectively ranging round 0 to ranging round 5. Ranging block 2 has only one ranging round 0 for one-to-many (one-to-many) MMS-UWB ranging. Ranging rounds for one-to-one MMS-UWB ranging in ranging block 0 and ranging block 1 have different quantities of ranging sequence fragments (ranging sequence fragments, RSFs) or ranging integrity fragments (ranging integrity fragments, RIFs), and therefore have different ranging round duration (ranging round duration). Ranging block 2 for one-to-many MMS-UWB ranging requires longer ranging round duration than ranging block 0 or ranging block 1 for one-to-one MMS-UWB ranging.
(2) Time interval, which may also be referred to as duration, and refers to a period of time. It may be understood that the time interval may be represented by using a value, or may be represented by using a time unit, for example, a slot or a symbol.
(3) Duration, also referred to as a time period, indicates duration. It may be understood that the duration may be represented by using a value, or may be represented by using a quantity of time units, for example, a quantity of slots, symbols, ranging blocks, ranging rounds, or even hyper blocks.

The technical solutions provided in embodiments of this application are described below with reference to the accompanying drawings.

The technical solutions provided in embodiments of this application are applicable to a UWB technology-based wireless personal area network (wireless personal area network, WPAN). For example, methods provided in embodiments of this application are applicable to Institute of Electrical and Electronics Engineers (Institute of Electrical and Electronics Engineers, IEEE) 802.15 series protocols such as the 802.15.4a protocol, the 802.15.4z protocol, the 802.15.4ab protocol, or a future generation of UWB WPAN standard. Examples are not enumerated. Embodiments of this application are applicable to a wireless local area network (wireless local area network, WLAN) scenario, for example, applicable to the Institute of Electrical and Electronics Engineers (Institute of Electrical and Electronics Engineers, IEEE) 802.11 system standard, for example, 802.11a/b/g, 802.11n, 802.11ac, 802.11ax, or a next generation of 802.11ax, for example, an 802.11be standard, Wi-Fi 7 or extremely high throughput (extremely high throughput, EHT), 802.11ad, 802.11ay, 802.11bf, or a next generation of 802.11be, for example, Wi-Fi 8, or a next-generation standard of Wi-Fi 8. Alternatively, embodiments of this application are applicable to a wireless local area network system like an internet of things (internet of things, IoT) network or a vehicle-to-everything (Vehicle to X, V2X) network. Certainly, embodiments of this application are further applicable to another possible communication system, for example, an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5G communication system, and a future 6G communication system.

The following uses an example in which embodiments of this application are applicable to a WLAN scenario. It should be understood that the WLAN starts from an 802.11a/g standard, and goes through 802.11n, 802.11ac, 802.11ax, and 802.11be that is currently being discussed. 802.11n may also be referred to as high throughput (high throughput, HT), 802.11ac may also be referred to as very high throughput (very high throughput, VHT), 802.11ax may also be referred to as high efficiency (high efficiency, HE) or Wi-Fi 6, 802.11be may also be referred to as EHT or Wi-Fi 7, and standards before HT, for example, 802.11a/b/g, may be collectively referred to as non-high throughput (Non-HT).

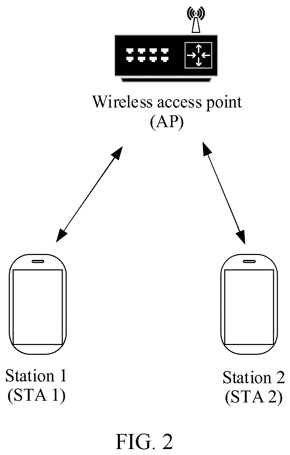

FIG. 2 is a diagram of a network architecture of a WLAN to which embodiments of this application are applicable. In FIG. 2, an example in which the WLAN includes one wireless access point (access point, AP) and two stations (stations, STAs) is used. A STA associated with the AP can receive a radio frame sent by the AP, and can also send a radio frame to the AP. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 2 are merely an example. There may be more or less APs and STAs.

The access point may be an access point through which a terminal device (for example, a mobile phone) accesses a wired (or wireless) network, and is mainly deployed at home, in a building, and in a campus, with a typical coverage radius ranging from tens of meters to hundreds of meters. Certainly, the access point may alternatively be deployed outdoors. The access point is equivalent to a bridge that connects the wired network and the wireless network, and is mainly used to connect various wireless network clients together and then connect the wireless network to the Ethernet. Specifically, the access point may be a terminal device (for example, a mobile phone) or a network device (for example, a router) with a Wi-Fi chip. The access point may be a device that supports the 802.11be standard. Alternatively, the access point may be a device that supports a plurality of wireless local area network (wireless local area network, WLAN) standards of the 802.11 family such as 802.11ax, 802.11ac, 802.11ad, 802.11ay, 802.11n, 802.11g, 802.11b, 802.11a, and a next generation of 802.11be.

The station may be a wireless communication chip, a wireless sensor, a wireless communication terminal, or the like, and may also be referred to as a user. For example, the station may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, a computer that supports a Wi-Fi communication function, or the like. Optionally, the station may support the 802.11be standard. Alternatively, the station may support a plurality of wireless local area network (wireless local area network, WLAN) standards of the 802.11 family such as 802.11ax, 802.11ac, 802.11n, 802.11g, 802.11b, 802.11a, and a next generation of 802.11be.

For example, the access point and the station may be devices used in an internet of vehicles, internet of things nodes or sensors in an internet of things (IoT, internet of things), smart cameras, smart remote controls, or smart water or electricity meters in a smart home, or sensors in a smart city.

The AP and the STA in embodiments of this application may be an AP and a STA that are applicable to the IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device like a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports medium access control (medium access control, MAC) and a physical layer (physical, PHY) of the 802.11 system standard, for example, a mobile phone or a notebook computer.

It may be understood that a first device in embodiments of this application may be an AP or a STA. Similarly, a second device in embodiments of this application may be an AP or a STA.

A UWB technology can provide very accurate ranging, positioning, sensing, and data communication capabilities and has an excellent coexistence feature, and therefore has been widely used in various consumer electronic devices such as mobile phones and wearable devices. In an MMS-UWB ranging technology, a multi-millisecond ranging sequence (multi-millisecond ranging sequence, MMRS) is transmitted for a plurality of times in a plurality of 1-millisecond RSFs, and a timestamp sequence (scrambled timestamp sequence, STS) is also transmitted for a plurality of times in a plurality of subsequent 1-millisecond RIFs, to effectively extend a secure ranging range. Quantities of RSFs and RIFs may vary depending on many factors, such as channel conditions. The MMS-UWB ranging technology is classified into a narrowband assisted (narrowband assisted, NBA) MMS-UWB ranging technology and a UWB-only MMS-UWB technology. The NBA-MMS-UWB ranging technology requires narrowband to assist in MMS-UWB ranging, while the UWB-only MMS-UWB technology does not require narrowband to assist.

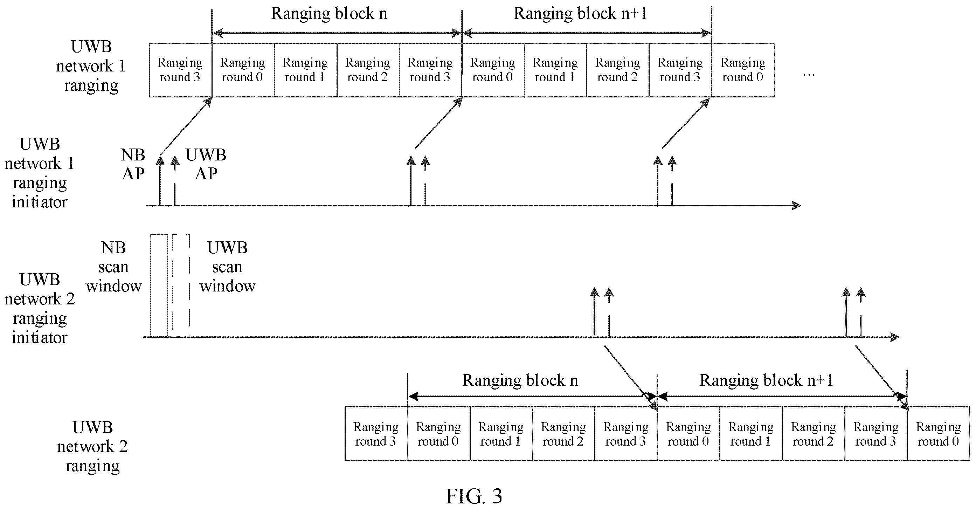

In a scenario in which UWB networks are densely deployed, a UWB channel usage coordination mechanism can effectively reduce interference between UWB networks. FIG. 3 is a diagram of an example of UWB channel usage coordination between two UWB networks. In FIG. 3, a ranging initiator of UWB network 1 can broadcast a data packet before each session starts. The data packet can carry information about the session of UWB network 1, for example, ranging block duration, ranging round duration, a UWB channel, and a preamble code. If the session uses the NBA-MMS-UWB ranging technology, the data packet may be a narrowband (narrowband, NB) acquisition packet (acquisition packet, AP). If the session uses the MMS-UWB ranging technology, the data packet may be a UWB AP.

Before initiating ranging, a ranging initiator of UWB network 2 scans the NB AP in an NB scan window, or scans the UWB AP in a UWB scan window. An example in which the ranging initiator of UWB network 2 scans the UWB AP in the UWB scan window is used for description. The ranging initiator of UWB network 2 can scan, in the UWB scan window, the UWB AP broadcast by the ranging initiator of UWB network 1. Because the data packet carries the information about the session of UWB network 1, when initiating ranging, the ranging initiator of UWB network 2 can use a ranging block or a ranging round that is not occupied by the session of UWB network 1, to reduce interference between networks. Optionally, UWB network 2 may alternatively broadcast the UWB AP or the NB AP before the session starts, to carry information about the session of UWB network 2.

The foregoing UWB channel usage coordination mechanism is of a ranging block-based time structure, and is not applicable to a ranging technology of a hyper block-based time structure. In addition, the foregoing UWB channel usage coordination mechanism is based on a conventional 802.15.4z ranging technology, and particularity of the MMS-UWB ranging technology is not considered. For example, an NB AP or UWB AP carries a preamble code used in the 802.15.4z ranging technology, but an RSF and an RIF in MMS-UWB ranging do not have a preamble code. In conclusion, the foregoing UWB channel usage coordination mechanism is not applicable to a current UWB ranging technology.

In view of this, embodiments of this application provide an information transmission method. In the method, an AP may receive a first data packet, where the first data packet may include first information and second information. The first information may indicate at least one ranging block occupied by a session corresponding to the first information, the second information may indicate that the first information is associated with a plurality of ranging blocks, and the plurality of ranging blocks may include the at least one ranging block occupied by the session. The AP may determine, on the plurality of ranging blocks based on the first information, the ranging block occupied by the session. According to this solution, the first information associated with the plurality of ranging blocks indicates the at least one ranging block occupied by the session, and the AP may determine, on the plurality of ranging blocks, the ranging block occupied by the session, so that the occupied ranging block can be avoided during ranging, to reduce interference.

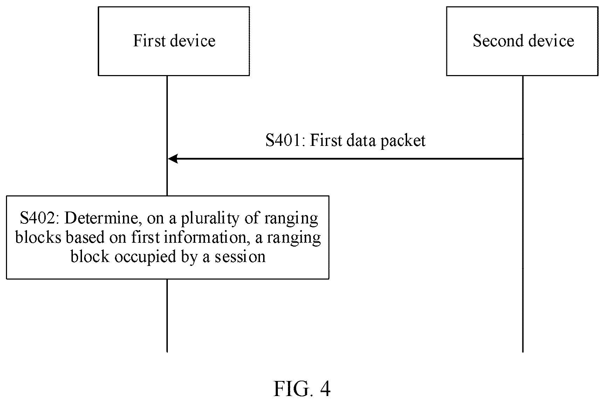

FIG. 4 is an example flowchart of an information transmission method according to an embodiment of this application. The method may include the following operations. In the embodiment shown in FIG. 4, an example in which a first device interacts with a second device is used for description. Optionally, the first device and the second device may be devices in different UWB networks.

S401: The second device sends a first data packet.

Correspondingly, the first device receives the first data packet.

For example, the second device may unicast the first data packet to the first device. For another example, the second device may broadcast or multicast the first data packet, and the first device may receive the first data packet broadcast or multicast by the second device.

In a possible implementation, the first data packet may include first information and second information. The first information indicates at least one ranging block occupied by a session corresponding to the first information, and the second information indicates that the first information is associated with one or more ranging blocks. For example, the second information indicates that the first information is associated with one ranging block, and the first information indicates one ranging block occupied by the session. For another example, the second information indicates that the first information is associated with a plurality of ranging blocks, and the first information indicates one or more ranging blocks occupied by the session. In other words, the second information may indicate a time structure to which the first information is applicable, and the second information may indicate whether the first information is applicable to a ranging block time structure or a hyper block time structure. The plurality of ranging blocks may form one hyper block, or the plurality of ranging blocks may be a plurality of ranging blocks included in one hyper block.

S402: The first device determines, on the plurality of ranging blocks based on the first information, the ranging block occupied by the session.

The first information may indicate the at least one ranging block occupied by the session corresponding to the first information. Therefore, the first device may parse the first information to determine the ranging block occupied by the session. For example, the second information indicates that the first information is associated with one ranging block, and the first information indicates an identifier of the ranging block occupied by the session, for example, a ranging block index. Therefore, the first device may determine the ranging block occupied by the session. For another example, the second information indicates that the first information is associated with a plurality of ranging blocks, for example, the first information is associated with one hyper block, and the first information may indicate the plurality of ranging blocks occupied by the session. Therefore, the first device may determine the plurality of ranging blocks occupied by the session.

In a possible implementation, the first information may include configuration information of MMS-UWB ranging. For example, the first information may include one or more of the following 1 to 5.
1. MMRS sequence index: The MMRS sequence index may indicate an MMRS sequence used for a session, that is, an MMRS sequence sent by the second device during ranging.
2. Quantity of repetitions of an MMRS: indicating a quantity of repetitions of an MMRS sequence used for a session, in other words, a quantity of times for sending the MMRS sequence by the second device during ranging.
3. Quantity of RSFs: In an MMS-UWB ranging technology, the MMRS sequence may be transmitted in a plurality of RSFs, and the quantity of RSFs may indicate a quantity of RSFs in which the MMRS sequence is transmitted.
4. Quantity of RIFs: In the MMS-UWB ranging technology, an STS sequence may be transmitted in an RIF, and the quantity of RIFs may indicate a quantity of RIFs in which the STS sequence is transmitted.
5. Gap size: indicating a gap size used for the MMRS sequence used for the session, in other words, a gap size used by the second device for sending the MMRS sequence during ranging.

The first device may determine, based on the first information, configuration information of a session to be executed by the second device, and therefore can generate, based on the configuration information, configuration information of a session to be executed by the first device, to reduce interference between sessions.

In embodiments of this application, the first information may have different types, and the second information may indicate a type of the first information. The type of the first information may indicate that the first information is associated with one or more ranging blocks. For example, the second information may indicate a type of the first data packet, to indicate the type of the first information. For example, if the second information indicates that the first data packet is of a block-based coordination type, the first information may be of a ranging block-based time structure. If the second information indicates that the first data packet is of a hyper block-based coordination type, the first information may be of hyper block-based time structure.

For another example, the second information may indicate the type of the first information. For example, it is assumed that a type of the first information of the ranging block-based time structure may be different from a type of the first information of the hyper block-based time structure. In this case, the second information may indicate the type of the first information, to indicate whether the first information is associated with one ranging block or a plurality of ranging blocks. It is assumed that the first information of the ranging block-based time structure may include type 1, type 2, and type 3, and the first information of the hyper block-based time structure may include type 4, type 5, and type 6. If the second information indicates that the type of the first information is one or more of type 1 to type 3, the first information is associated with one ranging block. If the second information indicates that the type of the first information is one or more of type 4 to type 6, the first information is associated with one hyper block.

The following describes, by using Table 1 to Table 4, a manner in which the second information indicates the type of the first information.

In a possible case, the first data packet may be an NB AP. The second information is carried in the NB AP to indicate the type of the first information or a type of the NB AP. The following provides descriptions by using Table 3 and Table 4.

**Table 1: Example of an NB AP**

| MAC payload | | Quantity of bits | Quantity of bytes | Description |
|---|---|---|---|---|
| Common information field | NB AP type | 3 | 1 | Indicate a type of an NB AP |
| | | | | 0: Coordination NB AP; 1 to 7: Reserved |
| | Reserved | 5 | | |
| | UWB AP present | 1 | 1 | If an NB AP type field is set to 0: |
| | | | | 0: No UWB AP is transmitted. |
| | | | | 1: A UWB AP is transmitted. |
| | | | | If a UWB AP present field is set to 1, the NB AP includes a UWB AP information field. |
| | | | | If the UWB AP present field is set to 0, the NB AP does not include the UWB AP information field. |
| | | | | If the NB AP type field is set to 0: |
| | UWB session information field type | 3 | | 0: The NB AP does not include a UWB session information field. |
| | | | | 1: The NB AP includes UWB session information field type 1. |
| | | | | 2: The NB AP includes UWB session information field type 2. |
| | | | | 3: The NB AP includes UWB session information field type 3. |
| | | | | 4: The NB AP includes UWB session information field type 4. |
| | | | | 5: The NB AP includes UWB session information field type 5. |
| | | | | 6: The NB AP includes UWB session information field type 6. |
| | | | | 7: Reserved |
| | Reserved | 3 | | |
| | Block/Hyper block index present | 1 | | 0: A block/hyper block index field is not present. |
| | | | | 1: The block/hyper block index field is present. |
| Block/Hyper block index | | 8 | 1 | If a UWB session information field type field is set to 1, 2, or 3, the block index is indicated. |
| | | | | If the UWB session information field type field is set to 4, 5, or 6, the hyper block index is indicated. |
| UWB AP information field | Delta T | 16 | 2 | Time remaining in RSTU (ranging scheduling time unit) until a start of a next UWB AP |
| | UWB channel | 5 | 1 | UWB channel number on which the UWB AP occurs after Delta T |
| | Reserved | 3 | | |
| | Preamble code | 8 | 1 | Preamble code index used by the UWB AP |
| UWB session information field | If the UWB session information field type field is set to 1, 2, 3, 4, 5, or 6, the UWB session information field is present. | | | |
| | All UWB session information fields included in an NB AP MAC payload are of a same type. | | | |

Table 1 shows an NB AP medium access control (medium access control, MAC) payload. In the MAC payload, an example in which the first information is the UWB session information field, and the second information is the UWB session information field type field is used.

As shown in Table 1, the MAC payload may include the NB AP type field, and the NB AP type field may indicate the type of the NB AP. For example, when a value of the NB AP type field is 0, it may indicate that the NB AP is a coordination NB AP.

The MAC payload may further include the UWB AP present field. The UWB AP present field may indicate whether a UWB AP is transmitted, for example, whether a UWB AP is transmitted after the NB AP is transmitted. For example, it is assumed that a value of the NB AP type field is 0. If a value of the UWB AP present field is 0, it may indicate that no UWB AP is transmitted. If the value of the UWB AP present field is 1, it may indicate that a UWB AP is transmitted, for example, a UWB AP is transmitted after the NB AP is transmitted. Optionally, if the value of the UWB AP present field is 1, that is, it indicates that a UWB AP is transmitted, the NB AP may further include a UWB AP information field, indicating information about the UWB AP, for example, information about resources occupied by the UWB AP. This is not specifically limited in this application. If the value of the UWB AP present field is 0, that is, it indicates that no UWB AP is transmitted, the NB AP may not include the UWB AP information field.

In a possible case, as shown in Table 1, the UWB AP information field may include a time interval T (delta T). The time interval T may indicate duration between a sending moment or a receiving moment of the NB AP and a sending moment or a receiving moment of the UWB AP. Optionally, the time interval T may be in a unit of a ranging scheduling time unit (ranging scheduling time unit, RSTU). The UWB AP information field may further include a UWB channel, that is, an index or a UWB channel number of a UWB channel carrying a UWB AP that occurs after the time interval T. The UWB AP information field may further include the preamble code index used by the UWB AP.

The MAC payload may further include the UWB session information field type field, namely, the second information. It is assumed that a value of the UWB AP type field is 0. If a value of the UWB session information field type field is 0, it indicates that the MAC payload does not include the UWB session information field, that is, does not include the first information. If the value of the UWB session information field type field is 1, it indicates that the type of the UWB session information field included in the MAC payload is type 1, that is, the type of the first information is type 1. If the value of the UWB session information field type field is 2, it indicates that the type of the UWB session information field included in the MAC payload is type 2, that is, the type of the first information is type 2; and so on. In other words, in Table 1, the second information may indicate, by indicating the type of the UWB session information field, whether the first information is associated with one ranging block or a plurality of ranging blocks.

In Table 1, the type of the first information of the ranging block-based time structure and the type of the first information of the hyper block-based time structure may be defined, and the two types of first information are different. It may be understood that the type of the first information shown in embodiments of this application is merely shown as an example, and does not constitute a limitation on the type of the first information. Details are not described below again.

Optionally, Table 1 may further include a ranging block/hyper block index present field, and the field indicates whether a block/hyper block index is present in the MAC payload. For example, if a value of the ranging block/hyper block index present field is 0, it may indicate that no ranging block/hyper block index is present in the MAC payload; or if the value of the ranging block/hyper block index present field is 1, it may indicate that a block/hyper block index is present in the MAC payload. This is also true the other way around. If the value of the ranging block/hyper block index present field is 1, it may indicate that no block/hyper block index is present in the MAC payload; or if the value of the ranging block/hyper block index present field is 0, it may indicate that a block/hyper block index is present in the MAC payload.

Optionally, if the ranging block/hyper block index present field in Table 1 indicates that a block/hyper block index is present in the MAC payload, the MAC payload may further indicate the ranging block index or the hyper block index. For example, if the second information indicates that the type of the UWB session information field is type 1, the UWB session information field is associated with one ranging block, and the ranging block/hyper block index present field indicates that the ranging block/hyper block index is present in the MAC payload. In this case, the ranging block/hyper block index field may indicate the ranging block associated with the UWB session information field. For another example, if the second information indicates that the type of the UWB session information field is type 4, the UWB session information field is associated with a plurality of ranging blocks, and the ranging block/hyper block index present field indicates that the ranging block/hyper block index is present in the MAC payload. In this case, the ranging block/hyper block index field may indicate a hyper block to which the plurality of ranging blocks associated with the UWB session information field belong or a hyper block including the plurality of ranging blocks associated with the UWB session information field.

Optionally, in Table 1, the MAC payload may include a plurality of pieces of first information, that is, include a plurality of UWB session information fields, and the UWB session information fields are of a same type. The plurality of UWB session information fields may be sorted in a sequence of session i and session i+1, or in a sequence of session i+1 and session i. For example, the MAC payload may include three UWB session information fields that respectively correspond to session 1, session 2, and session 3. In this case, in the MAC payload, the three UWB session information fields are sorted in a sequence of the UWB session information field of session 1, the UWB session information field of session 2, and the UWB session information field of session 3, or sorted in a sequence of the UWB session information field of session 3, the UWB session information field of session 2, and the UWB session information field of session 1.

It should be noted that names of fields, a quantity of bits, a quantity of bytes, and information corresponding to values of the fields that are shown in embodiments of this application are merely shown as examples, and do not constitute a limitation on the fields included in the MAC payload. In addition, the MAC payload may include all information in tables, for example, Table 1, shown in embodiments of this application, or may include a subset of the information shown in the tables. Alternatively, the tables shown in embodiments of this application may be used as a subset of information included in the MAC payload.

**Table 2: Example of an NB AP**

| MAC payload | | Quantity of bits | Quantity of bytes | Description |
|---|---|---|---|---|
| Common information field | NB AP type | 3 | 1 | Indicate a type of an NB AP |
| | | | | 0: Block-based coordination NB AP; 1: Hyper block-based coordination NB AP; 2 to 7: Reserved |
| | Reserved | 5 | | |
| | UWB AP present | 1 | 1 | If an NB AP type field is set to 0 or 1: |
| | | | | 0: No UWB AP is transmitted. |
| | | | | 1: A UWB AP is transmitted. |
| | | | | If a UWB AP present field is set to 1, the NB AP includes a UWB AP information field. |
| | | | | If the UWB AP present field is set to 0, the NB AP does not include the UWB AP information field. |
| | | | | If the NB AP type field is set to 0 or 1: 0: The NB AP does not include a UWB session information field. |
| | UWB session information field type | 3 | | |
| | | | | 1: The NB AP includes UWB session information field type 1. |
| | | | | 2: The NB AP includes UWB session information field type 2. |
| | | | | 3: The NB AP includes UWB session information field type 3. |
| | | | | 4 to 7: Reserved |
| | Reserved | 3 | | |
| | Block/Hyper block index present | 1 | | 0: A block/hyper block index field is not present. |
| | | | | 1: The block/hyper block index field is present. |
| Block/Hyper block index | | 8 | 1 | If the NB AP type is set to 0, the block index is indicated. |
| | | | | If the NB AP type is set to 1, the hyper block index is indicated. |
| UWB AP information field | Delta T | 16 | 2 | Time remaining in RSTU until a start of a next UWB AP |
| | UWB channel | 5 | 1 | UWB channel number on which the UWB AP occurs after Delta T |
| | Reserved | 3 | | |
| | Preamble code | 8 | 1 | Preamble code index used by the UWB AP |
| UWB session information field | If a UWB session information field type field is set to 1, 2, or 3, the UWB session information field is present. | | | |
| | All UWB session information fields included in an NB AP MAC payload are of a same type. | | | |

Table 2 shows an NB AP MAC payload. In the MAC payload, an example in which the first information is the UWB session information field, and the second information is the NB AP type field is used.

As shown in Table 2, the MAC payload may include the NB AP type field, and the NB AP type field may indicate the type of the NB AP. For example, when a value of the NB AP type field is 0, it may indicate that the NB AP is a ranging block-based coordination NB AP; or when the value of the NB AP type field is 1, it may indicate that the NB AP is a hyper block-based coordination NB AP. In other words, in Table 2, the NB AP type field, namely, the second information, may indicate whether the first information is associated with one ranging block or a plurality of ranging blocks.

The MAC payload may further include the UWB session information field type field. In Table 1, a type of a UWB session information field of the ranging block-based time structure and a type of a UWB session information field of the hyper block-based time structure may be the same. Optionally, UWB session information fields of a same type may have different formats when being used for the hyper block-based time structure and when being used for the ranging block-based time structure.

Optionally, the MAC payload may further include a UWB AP present field, a UWB AP information field, a ranging block/hyper block index present field, and a ranging block/hyper block index field. For an implementation, refer to Table 1. Optionally, in Table 2, the MAC payload may include a plurality of pieces of first information. For an implementation, refer to Table 1.

The foregoing describes, by using Table 1 and Table 2, a case in which the first data packet is an NB AP. In another possible case, the first data packet may be a UWB AP. The second information is carried in the UWB AP to indicate the type of the first information or a type of the UWB AP. The following provides descriptions by using Table 3 and Table 4.

**Table 3: Example of a UWB AP**

| Medium access control MAC payload | | Quantity of bits | Quantity of bytes | Description |
|---|---|---|---|---|
| Common information field | UWB AP type | 3 | 1 | Indicate a type of a UWB AP |
| | | | | 0: Coordination UWB AP; 1 to 7: Reserved |
| | Reserved | 5 | | |
| | UWB session information field type | 3 | 1 | If the UWB AP type field is set to 0: |
| | | | | 0: The UWB AP does not include a UWB session information field. |
| | | | | 1: The UWB AP includes UWB session information field type 1. |
| | | | | 2: The UWB AP includes UWB session information field type 2. |
| | | | | 3: The UWB AP includes UWB session information field type 3. |
| | | | | 4: The UWB AP includes UWB session information field type 4. |
| | | | | 5: The UWB AP includes UWB session information field type 5. |
| | | | | 6: The UWB AP includes UWB session information field type 6. |
| | | | | 7: Reserved |
| | Reserved | 4 | | |
| | Block/Hyper block index present | 1 | | 0: A block/hyper block index field is not present. |
| | | | | 1: The block/hyper block index field is present. |
| Block/Hyper block index | | 8 | 1 | If a UWB session information field type field is set to 1, 2, or 3, the block index is indicated. |
| | | | | If the UWB session information field type field is set to 4, 5, or 6, the hyper block index is indicated. |
| UWB session information field | If the UWB session information field type field is set to 1, 2, 3, 4, 5, or 6, the UWB session information field is present. | | | |
| | All UWB session information fields included in a UWB AP MAC payload are of a same type. | | | |
| | Note: If all UWB APs include UWB session information fields, a sequence of the UWB session information fields needs to be consistent. For example, in the UWB AP, information about UWB session i is followed by information about UWB session i+1. | | | |

Table 3 shows a UWB AP MAC payload. In the MAC payload, an example in which the first information is the UWB session information field, and the second information is the UWB session information field type is used.

As shown in Table 3, the MAC payload may include the UWB AP type field, and the UWB AP type field may indicate the type of the UWB AP. For example, when a value of the UWB AP type field is 0, it may indicate that the UWB AP is a coordination UWB AP.

The MAC payload may further include the UWB session information field type field, namely, the second information. It is assumed that a value of the UWB AP type field is 0. If a value of the UWB session information field type field is 0, it indicates that the MAC payload does not include the UWB session information field, that is, does not include the first information. If the value of the UWB session information field type field is 1, it indicates that the type of the UWB session information field included in the MAC payload is type 1, that is, the type of the first information is type 1. If the value of the UWB session information field type field is 2, it indicates that the type of the UWB session information field included in the MAC payload is type 2, that is, the type of the first information is type 2; and so on. In other words, in Table 1, the second information may indicate, by indicating the type of the UWB session information field, whether the first information is associated with one ranging block or a plurality of ranging blocks.

Optionally, Table 3 may further include a ranging block/hyper block index present field and a ranging block/hyper block index. For an implementation, refer to Table 1. Optionally, in Table 3, the MAC payload may include a plurality of pieces of first information. For an implementation, refer to Table 1.

**Table 4: Example of a UWB AP**

| MAC payload | | Quantity of bits | Quantity of bytes | Description |
|---|---|---|---|---|
| Common information field | UWB AP type | 3 | 1 | Indicate a type of a UWB AP |
| | | | | 0: Block-based coordination UWB AP; 1: Hyper block-based coordination UWB AP; 2 to 7: Reserved |
| | Reserved | 5 | | |
| | UWB session information field type | 3 | 1 | If the UWB AP type is set to 0 or 1: 0: The UWB AP does not include a UWB session information field. |
| | | | | 1: The UWB AP includes UWB session information field type 1. |
| | | | | 2: The UWB AP includes UWB session information field type 2. |
| | | | | 3: The UWB AP includes UWB session information field type 3. |
| | | | | 4 to 7: Reserved |
| | Reserved | 4 | | |
| | Block/Hyper block index present | 1 | | 0: A block/hyper block index field is not present. |
| | | | | 1: The block/hyper block index field is present. |
| Block/Hyper block index | | 8 | 1 | If the UWB AP type is set to 0, the block index is indicated. If the UWB AP type is set to 1, the hyper block index is indicated. |
| UWB session information field | If a UWB session information field type field is set to 1, 2, or 3, the UWB session information field is present. All UWB session information fields included in a UWB AP MAC payload are of a same type. Note: If both the NB AP and the UWB AP include UWB session information fields, a sequence of the UWB session information fields needs to be consistent. For example, in the NB AP and the UWB AP, information about UWB session i is followed by information about UWB session i+1. | | | |

Table 4 shows a UWB AP MAC payload. In the MAC payload, an example in which the first information is the UWB session information field, and the second information is the UWB type field is used.

As shown in Table 4, the MAC payload may include the UWB AP type field, and the UWB AP type field may indicate the type of the UWB AP. For example, when a value of the UWB AP type field is 0, it may indicate that the UWB AP is a ranging block-based coordination UWB AP; or when the value of the UWB AP type field is 1, it may indicate that the UWB AP is a hyper block-based coordination UWB AP. In other words, in Table 4, the UWB AP type field, namely, the second information, may indicate whether the first information is associated with one ranging block or a plurality of ranging blocks.

The MAC payload may further include the UWB session information field type field. In Table 4, a type of a UWB session information field of the ranging block-based time structure and a type of a UWB session information field of the hyper block-based time structure may be the same. Optionally, UWB session information fields of a same type may have different formats when being used for the hyper block-based time structure and when being used for the ranging block-based time structure.

Optionally, Table 4 may further include a ranging block/hyper block index present field and a ranging block/hyper block index field. For an implementation, refer to Table 1. Optionally, in Table 4, the MAC payload may include a plurality of pieces of first information. For an implementation, refer to Table 1.

The foregoing describes, by using Table 1 to Table 4, an implementation in which the second information indicates whether the first information is associated with one ranging block or a plurality of ranging blocks in embodiments of this application. In a possible case, the first information associated with the plurality of ranging blocks may include one or more types. The following provides descriptions by using case 1 to case 3.

Case 1: The type of the first information includes a first type.

In the NB AP or the UWB AP, the UWB session information field type field may indicate the type of the first information. The type of the first information may include the first type, and the first information of the first type may be associated with a plurality of ranging blocks. The first information of the first type may carry minimum session information. For example, the first information may carry the configuration information of MMS-UWB ranging and hyper block duration. The following provides descriptions by using Table 5.

**Table 5: Example of first information**

| First-type UWB session information field | Quantity of bits | Quantity of bytes | Description |
|---|---|---|---|
| Hyper block duration | 32 | 4 | In RSTU |
| UWB channel | 5 | 1 | UWB channel used by a session |
| Hop mode | 1 | | 0: No hopping; 1: No hopping |
| Reserved | 2 | | |
| Quantity of repetitions of an MMRS | 3 | | Quantity of repetitions of an MMRS sequence used for the session |
| | | | 0: 32, 1: 40, 2: 48, 3: 64, 4: 128, 5: 256, 6 and 7: Reserved |
| Quantity of RSFs | 3 | | Quantity of RSFs in MMS-UWB |
| | | | 0: 0, 1: 1, 2: 2, 3: 4, 4: 8, 5 to 7: Reserved |
| Quantity of RIFs | 2 | | Quantity of RIFs in MMS-UWB |
| | | | 0: 1, 1: 2, 2: 4, 3: 8, 4 to 7: Reserved |
| MMRS sequence index | 8 | 1 | 0 to 47: An index of the MMRS sequence used for the session is decreased by 1. |
| | | | 48 to 255: Reserved |
| Gap size | 8 | 1 | 0 to 64: Gap size used for the MMRS sequence |
| | | | 65 to 255: Reserved |

Table 5 shows an example of the first information of the first type. As shown in Table 5, the first information may include a hyper block duration field. The hyper block duration field may indicate duration of a hyper block. Optionally, the hyper block duration may be in RSTU.

In Table 5, the first information may further include a UWB channel field, and the UWB channel field may indicate a UWB channel used for the session corresponding to the first information, for example, indicate a UWB channel number. As shown in Table 5, the first information may further include the configuration information shown in 1 to 5.

In Table 5, the first information may further include the configuration information of MMS-UWB ranging.

Optionally, Table 5 may further include a hop mode field. As shown in Table 5, when a value of the hop mode field is 0 or 1, it indicates no hopping.

In a possible case, because the first information of the first type carries the minimum session information, the first device may not be able to determine, based on only the first information, the ranging block occupied by the session. The first device may synchronize with the hyper block based on the hyper block duration, that is, perform clock synchronization based on the hyper block duration. The first device may receive control information, where the control information may indicate the ranging block occupied by the session corresponding to the first information. In this way, the first device may determine, based on the control information, the ranging block occupied by the session.

Based on the first information of the first type, the first information may carry the minimum session information, so that signaling overheads of the first information can be reduced.

Case 2: The first information includes a second type.

In the NB AP or the UWB AP, the UWB session information field type field may indicate the type of the first information. The type of the first information may include the second type, and the first information of the second type may be associated with a plurality of ranging blocks. The first information of the second type may carry detailed session information of the ranging block occupied by the session. For example, the first information may carry a ranging block index, a start moment of an active period, and active period duration. The following provides descriptions by using Table 6.

**Table 6: Example of first information**

| Second-type UWB session information field | Quantity of bits | Quantity of bytes | Description |
|---|---|---|---|
| Delta T | 24 | 3 | Time remaining in RSTU until a start of an active period |
| UWB channel | 5 | 1 | UWB channel used by a session |
| Reserved | 3 | | |
| Quantity of repetitions of an MMRS | 3 | 1 | Quantity of repetitions of an MMRS sequence used for the session 0: 32, 1: 40, 2: 48, 3: 64, 4: 128, 5: 256, 6 and 7: Reserved |
| Quantity of RSFs | 3 | | Quantity of RSFs in MMS-UWB 0: 0, 1: 1, 2: 2, 3: 4, 4: 8, 5 to 7: Reserved |
| Quantity of RIFs | 2 | | Quantity of RSFs in MMS-UWB 0: 1, 1: 2, 2: 4, 3: 8, 4 to 7: Reserved |
| MMRS sequence index | 8 | 1 | 0 to 47: An index of the MMRS sequence used for the session is decreased by 1. |
| | | | 48 to 255: Reserved |
| Gap size | 8 | 1 | 0 to 64: Gap size used for the MMRS sequence |
| | | | 65 to 255: Reserved |
| Active period duration | 24 | 3 | Duration of the active period of the session |
| First block | 1 | 1 | 0: A current block is not the first block used for the session. |
| | | | 1: The current block is the first block used for the session. |
| Tail block | 1 | | 0: The current block is not the tail block used for the session. |
| | | | 1: The current block is the tail block used for the session. |
| Reserved | 6 | | |
| Block index | 8 | 1 | Index of a current ranging block |

Table 6 shows an example of the first information of the second type. The first information may include a ranging block index, first indication information, and second indication information. In Table 6, an example in which the first indication information is a first block field and the second indication information is a tail block field is used. The ranging block index may indicate an index of one ranging block occupied by the session. In other words, the first information of the second type may indicate information about one of the plurality of ranging blocks occupied by the session. The first indication information may indicate whether the ranging block corresponding to the ranging block index is a first ranging block used for the session. For example, when a value of the first block field is 0, it indicates that the ranging block corresponding to the ranging block index is not the first ranging block used for the session; or when the value of the first block field is 1, it indicates that the ranging block corresponding to the ranging block index is the first ranging block used for the session. The second indication information may indicate whether the ranging block corresponding to the ranging block index is a last ranging block used for the session. For example, when a value of the tail block field is 0, it indicates that the ranging block corresponding to the ranging block index is not the last ranging block used for the session; or when the value of the tail block field is 1, it indicates that the ranging block corresponding to the ranging block index is the last ranging block used for the session.

The first device can accurately determine, by using the ranging block index, the first indication information, and the second indication information, all ranging blocks occupied by a same session in the hyper block.

In Table 6, the first information may further include the configuration information of MMS-UWB ranging.

Optionally, in Table 6, the first information may further include an active period duration field, and the active period duration field may indicate duration of the session. Optionally, the active period duration field may indicate one piece of duration, or may indicate one or more consecutive ranging rounds that are included in the ranging block corresponding to the ranging block index and that are occupied by the session. For example, the active period duration field may indicate indexes of the one or more consecutive ranging rounds. In other words, the first information may further indicate one or more consecutive ranging rounds of a specific ranging block occupied by the session. In a possible case, the ranging round occupied by the session may be indicated by using a bitmap. In another possible case, the ranging round occupied by the session may be indicated by using an index of a first ranging round occupied by the session and a quantity of ranging rounds.

Optionally, in Table 6, the first information may further include a first time interval (Delta T). The first time interval may indicate a time interval between a sending moment or a receiving moment of the first data packet and a start moment of the first ranging round occupied by the session. The first time interval may be in RSTU.

Optionally, the first information shown in Table 6 may further include a quantity of ranging rounds field (not shown in the table) and/or a ranging round duration field (not shown in the table). The quantity of ranging rounds field may indicate a quantity of ranging rounds that are included in the ranging block corresponding to the ranging block index and that are occupied by the session. The ranging round duration field may indicate duration of a ranging round that is included in the ranging block corresponding to the ranging block index and that is occupied by the session.

Optionally, in Table 6, the first information may further include a UWB channel field. For an implementation, refer to Table 5.

In a possible case, the first data packet may carry a plurality of pieces of first information, and each piece of first information may include one ranging block index. The plurality of pieces of first information may correspond to a same session, or may correspond to a plurality of different sessions. First information corresponding to a same session may be sorted in ascending or descending order of included ranging block indexes. For example, the first data packet carries three pieces of first information, the three pieces of first information respectively include ranging block index 0, ranging block index 1, and ranging block index 2, and the three pieces of first information may correspond to a same session. In this case, the three pieces of first information may be sorted in a sequence of ranging block index 0, ranging block index 1, and ranging block index 2, or may be sorted in a sequence of ranging block index 2, ranging block index 1, and ranging block index 0.

Based on the first information shown in Table 6, the first device may determine, based on the first information, information about a specific ranging block occupied by the session, that is, information about a ranging block corresponding to a ranging block index.

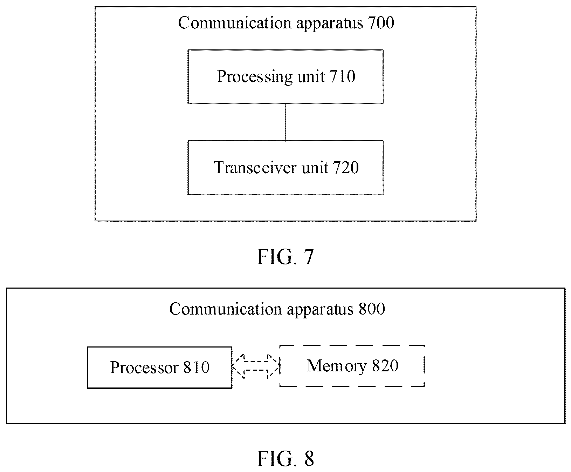

In a possible implementation, the first information may carry information about all ranging blocks occupied by the session. The following provides descriptions in FIG. 7.

**Table 7: Example of first information**

| Second-type UWB session information field | Quantity of bits | Quantity of bytes | Description |
|---|---|---|---|
| UWB channel | 5 | 1 | UWB channel used by a session |
| Reserved | 3 | | |
| Quantity of repetitions of an MMRS | 3 | 1 | Quantity of repetitions of an MMRS sequence used for the session 0: 32, 1: 40, 2: 48, 3: 64, 4: 128, 5: 256, 6 and 7: Reserved |
| Quantity of RSFs | 3 | | Quantity of RSFs in MMS-UWB 0: 0, 1: 1, 2: 2, 3: 4, 4: 8, 5 to 7: Reserved |
| Quantity of RIFs | 2 | | Quantity of RSFs in MMS-UWB 0: 1, 1: 2, 2: 4, 3: 8, 4 to 7: Reserved |
| MMRS sequence index | 8 | 1 | 0 to 47: An index of the MMRS sequence used for the session is decreased by 1. |
| | | | 48 to 255: Reserved |
| Gap size | 8 | 1 | 0 to 64: Gap size used for the MMRS sequence |
| | | | 65 to 255: Reserved |
| Quantity of blocks (M) | 8 | 1 | Quantity of ranging blocks occupied by the session |
| Index of a first block | 8 | 1 | Index of a first ranging block |
| Delta T of the first block | 24 | 3 | Time remaining in RSTU until a start of an active period of the first ranging block |
| Active period duration of the first block | 24 | 3 | Active period duration of the first ranging block |
| ... | ... | ... | ... |
| Index of an M^{th} block | 8 | 1 | Index of an M^{th} ranging block |
| Delta T of the M^{th} block | 24 | 3 | Time remaining in RSTU until a start of an active period of the M^{th} ranging block |
| Active period duration of the M^{th} block | 24 | 3 | Active period duration of the M^{th} ranging block |

Table 7 shows the first information of the second type. The first information carries information about M ranging blocks occupied by the session.

For example, the first information may include a quantity of blocks field. The quantity of blocks field may indicate a quantity of ranging blocks occupied by the session. For another example, the first information may include indexes of the M ranging blocks occupied by the session, where M is an integer greater than or equal to 1. As shown in Table 7, the first information may include an index-of-first-block field to an index-of M^{th}-block field. The index-of-first-block field may indicate the index of the first ranging block occupied by the session, and the index-of-M^{th}-block field may indicate the index of the M^{th} ranging block occupied by the session.

In Table 7, the first information may further include M time interval fields and M active period duration fields. An index of each block corresponds to one time interval field and one active period duration field. For example, an m^{th} active period duration field may indicate duration for which the session occupies an m^{th} ranging block. Optionally, the active period duration field may indicate one piece of duration, or may indicate one or more consecutive ranging rounds that are included in the m^{th} ranging block and that are occupied by the session, for example, indicate an index of a ranging round. In other words, the first information may further indicate one or more consecutive ranging rounds of the m^{th} ranging block occupied by the session.

In a possible implementation, the one or more consecutive ranging rounds in the m^{th} ranging block occupied by the session may be indicated by using a bitmap. In another possible case, the one or more ranging rounds occupied by the session in the m^{th} ranging block may be indicated by using an index of a first ranging round occupied by the session and a quantity of ranging rounds.

For another example, an m^{th} time interval indicates a time interval between a receiving moment or a sending moment of the first data packet and a start moment of the first ranging round occupied by the session in the m^{th} ranging block. The time interval may be in RSTU.

Optionally, the first information shown in Table 7 may further include a quantity of ranging rounds field (not shown in the table) and/or a field of duration of a ranging round included in a ranging block (not shown in the table). The quantity of ranging rounds may indicate a field of a quantity of ranging rounds that are included in the m^{th} ranging block and that are occupied by the session. The ranging round duration field may indicate a field of duration of a ranging round that is included in the m^{th} ranging block and that is occupied by the session.

Optionally, in Table 7, the first information may further include a UWB channel field. For an implementation, refer to Table 5.

In Table 7, the first information may further include the configuration information of MMS-UWB ranging.

Based on the first information of the second type, the first device may determine detailed information of a ranging block occupied by the session, so that the first device can be prevented from continuing to scan subsequent control information, to reduce overheads of the first device.

Case 3: The first information includes a third type.

In the NB AP or the UWB AP, the UWB session information field type field may indicate the type of the first information. The type of the first information may include the third type, and the first information of the third type may be associated with a plurality of ranging blocks. The first information of the third type may carry detailed session information of the ranging block occupied by the session. For example, the first information may carry a ranging block index, a start moment of an active period, and active period duration. It may be understood that a difference between the first information of the third type and the first information of the second type lies in that the first information of the second type indicates that a plurality of ranging rounds of a ranging block occupied by the session are consecutive in time domain, and the first information of the third type indicates that a plurality of ranging rounds of a ranging block occupied by the session may be inconsecutive or consecutive. The following provides descriptions by using Table 8.

**Table 8: Example of first information**

| Third-type UWB session information field | Quantity of bits | Quantity of bytes | Description |
|---|---|---|---|
| Delta T | 24 | 3 | Time remaining in RSTU until a start of an occupied block |
| UWB channel | 5 | 1 | UWB channel used by a session |
| Hop mode | 1 | | 0: No hopping; 1: No hopping |
| Reserved | 2 | | |
| Quantity of repetitions of an MMRS | 3 | 1 | Quantity of repetitions of an MMRS sequence used for the session 0: 32, 1: 40, 2: 48, 3: 64, 4: 128, 5: 256, 6 and 7: Reserved |
| Quantity of RSFs | 3 | | Quantity of RSFs in MMS-UWB 0: 0, 1: 1, 2: 2, 3: 4, 4: 8, 5 to 7: Reserved |
| Quantity of RIFs | 2 | | Quantity of RSFs in MMS-UWB 0: 1, 1: 2, 2: 4, 3: 8, 4 to 7: Reserved |
| MMRS sequence index | 8 | 1 | 0 to 47: An index of the MMRS sequence used for the session is decreased by 1. |
| | | | 48 to 255: Reserved |
| Gap size | 8 | 1 | 0 to 64: Gap size used for the MMRS sequence |
| | | | 65 to 255: Reserved |
| Round duration | 24 | 3 | Round duration of a session occupied block |
| Quantity of active rounds | 8 | 1 | Quantity of active rounds of the session occupied block |
| Active round | 24 | 3 | Index of the active round indicated by using a bitmap |
| First block | 1 | 1 | 0: A current block is not the first block used for the session. |
| | | | 1: The current block is the first block used for the session. |
| Tail block | 1 | | 0: The current block is not the tail block used for the session. |
| | | | 1: The current block is the tail block used for the session. |
| Reserved | 6 | | |
| Block index | 8 | 1 | Index of the current block |

Table 8 shows an example of the first information of the third type. The first information may include a ranging block index, first indication information, and second indication information. In Table 8, an example in which the first indication information is a first block field and the second indication information is a tail block field is used. The ranging block index may indicate an index of one ranging block occupied by the session. In other words, the first information of the third type may indicate information about one of the plurality of ranging blocks occupied by the session. The first indication information may indicate whether the ranging block corresponding to the ranging block index is a first ranging block used for the session. For example, when a value of the first block field is 0, it indicates that the ranging block corresponding to the ranging block index is not the first ranging block used for the session; or when the value of the first block field is 1, it indicates that the ranging block corresponding to the ranging block index is the first ranging block used for the session. The second indication information may indicate whether the ranging block corresponding to the ranging block index is a last ranging block used for the session. For example, when a value of the tail block field is 0, it indicates that the ranging block corresponding to the ranging block index is not the last ranging block used for the session; or when the value of the tail block field is 1, it indicates that the ranging block corresponding to the ranging block index is the last ranging block used for the session.

The first device can accurately determine, by using the ranging block index, the first indication information, and the second indication information, all ranging blocks occupied by a same session in the hyper block.

In Table 8, the first information may further include the configuration information of MMS-UWB ranging.

Optionally, in Table 8, the first information may further include a round duration field, a quantity of active rounds field, and an active round field. The round duration field may indicate duration of a ranging round that is included in the ranging block corresponding to the ranging block index and that is occupied by the session. The quantity of active rounds field may indicate a quantity of ranging rounds that are included in the ranging block corresponding to the ranging block index and that are occupied by the session. The active round field may indicate a ranging round that is included in the ranging block corresponding to the ranging block index and that is occupied by the session, for example, an index of a ranging round. In a possible case, the ranging round occupied by the session may be indicated by using a bitmap.

Optionally, in Table 8, the first information may further include a second time interval (Delta T). The second time interval may indicate a time interval between a sending moment or a receiving moment of the first data packet and a start moment of the first ranging round occupied by the session. The first time interval may be in RSTU.

Optionally, in Table 8, the first information may further include a UWB channel field. For an implementation, refer to Table 5.

In a possible case, the first data packet may carry a plurality of pieces of first information, and each piece of first information may include one ranging block index. The plurality of pieces of first information may correspond to a same session, or may correspond to a plurality of different sessions. First information corresponding to a same session may be sorted in ascending or descending order of included ranging block indexes. For example, the first data packet carries three pieces of first information, the three pieces of first information respectively include ranging block index 0, ranging block index 1, and ranging block index 2, and the three pieces of first information may correspond to a same session. In this case, the three pieces of first information may be sorted in a sequence of ranging block index 0, ranging block index 1, and ranging block index 2, or may be sorted in a sequence of ranging block index 2, ranging block index 1, and ranging block index 0.

Based on the first information shown in Table 8, the first device may determine, based on the first information, information about a specific ranging block occupied by the session, that is, information about a ranging block corresponding to a ranging block index.

In a possible implementation, the first information may carry information about all ranging blocks occupied by the session. The following provides descriptions by using Table 9.

**Table 9: Example of first information**

| Third-type UWB session information field | Quantity of bits | Quantity of bytes | Description |
|---|---|---|---|
| Delta T | 24 | 3 | Time remaining in RSTU until a start of a hyper block |
| UWB channel | 5 | 1 | UWB channel used by a session |
| Hop mode | 1 | | 0: No hopping; 1: No hopping |
| Reserved | 2 | | |
| Quantity of repetitions of an MMRS | 3 | 1 | Quantity of repetitions of an MMRS sequence used for the session 0: 32, 1: 40, 2: 48, 3: 64, 4: 128, 5: 256, 6 and 7: Reserved |
| Quantity of RSFs | 3 | | Quantity of RSFs in MMS-UWB 0: 0, 1: 1, 2: 2, 3: 4, 4: 8, 5 to 7: Reserved |
| Quantity of RIFs | 2 | | Quantity of RSFs in MMS-UWB 0: 1, 1: 2, 2: 4, 3: 8, 4 to 7: Reserved |
| MMRS sequence index | 8 | 1 | 0 to 47: An index of the MMRS sequence used for the session is decreased by 1. |
| | | | 48 to 255: Reserved |
| Gap size | 8 | 1 | 0 to 64: Gap size used for the MMRS sequence |
| | | | 65 to 255: Reserved |
| Quantity of blocks (M) | 8 | 1 | Quantity of blocks occupied by the session |
| Index of a first block | 16 | 2 | Index of a first occupied block |
| Round duration of the first block | 24 | 3 | Round duration of the first occupied block |
| Quantity of rounds of the first block | 8 | 1 | |
| Active round of the first block | 48 | 6 | Index of an active round of the first occupied block indicated by using a bitmap |
| ... | ... | ... | ... |
| Index of the first block | 16 | 2 | Index of the first occupied block |
| Round duration of an M^{th} block | 24 | 3 | Round duration of an M^{th} occupied block |
| Quantity of rounds of the M^{th} block | 8 | 1 | |
| Active round of the M^{th} block | 48 | 6 | Index of an active round of the M^{th} occupied block indicated by using a bitmap |

Table 9 shows the first information of the third type. The first information carries information about M ranging blocks occupied by the session.

For example, the first information may include a quantity of blocks field. The quantity of blocks field may indicate a quantity of ranging blocks occupied by the session. For another example, the first information may include indexes of the M ranging blocks occupied by the session, where M is an integer greater than or equal to 1. As shown in Table 9, the first information may include an index-of-first-block field to an index-of M^{th}-block field. The index-of-first-block field may indicate the index of the first ranging block occupied by the session, and the index-of-M^{th}-block field may indicate the index of the M^{th} ranging block occupied by the session.

In Table 9, the first information may further include M time interval fields. An index of each block corresponds to one time interval field. An m^{th} time interval indicates a time interval between a receiving moment or a sending moment of the first data packet and a start moment of the first ranging round occupied by the session in an m^{th} ranging block. The time interval may be in RSTU.

The first information may further include M round duration fields, M quantity of active rounds fields, and M active round fields. The round duration field may indicate duration of a ranging round included in the m^{th} ranging block. The quantity of active rounds field may indicate a quantity of ranging rounds that are included in the m^{th} ranging block and that are occupied by the session. The active round field may indicate a ranging round that is included in the m^{th} ranging block and that is occupied by the session, for example, an index of a ranging round. In a possible case, the ranging round occupied by the session may be indicated by using a bitmap.

Optionally, in Table 9, the first information may further include a UWB channel field. For an implementation, refer to Table 5.

In Table 9, the first information may further include the configuration information of MMS-UWB ranging.

Based on the first information of the third type, the first device may determine detailed information of a ranging block occupied by the session, so that the first device can be prevented from continuing to scan subsequent control information, to reduce overheads of the first device.

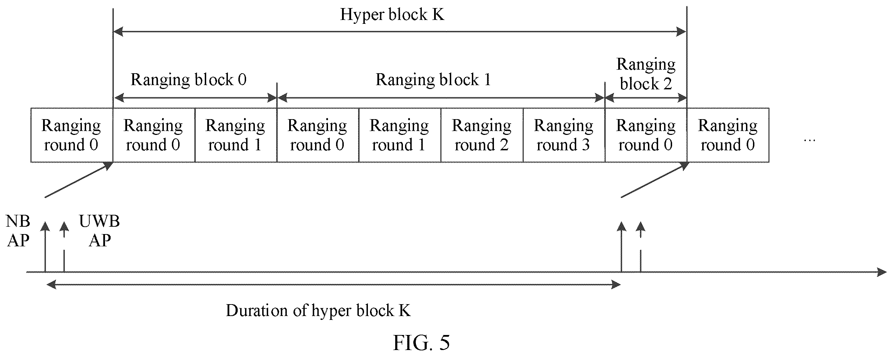

In a possible implementation, the first data packet may be periodically broadcast. As shown in FIG. 5, a second device may determine a sending moment of the first data packet based on a start moment of a hyper block. For example, the sending moment of the first data packet may be determined by adding an offset to the start moment of the hyper block, and the offset may be a negative number. For another example, the second device may broadcast the first data packet before the start moment of the hyper block.

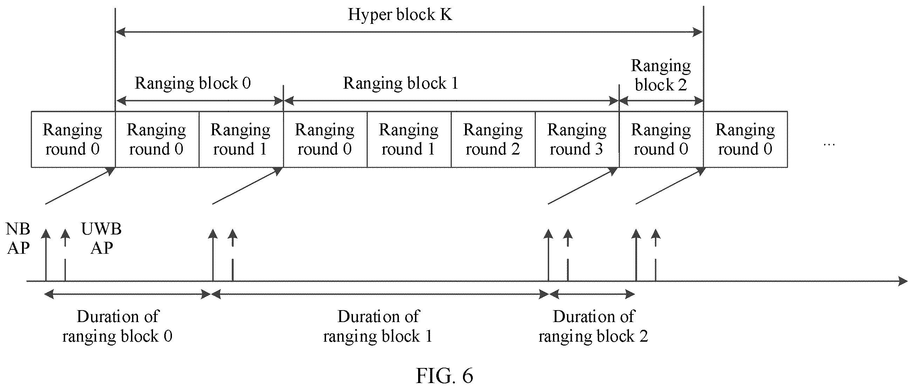

In another possible implementation, the first data packet may be aperiodically broadcast. As shown in FIG. 6, a second device may determine a sending moment of the first data packet based on a start moment of a ranging block in a hyper block. For example, the sending moment of the first data packet may be determined by adding an offset to a start moment of each ranging block in the hyper block, and the offset may be a negative number. For another example, the second device may broadcast the first data packet before the start moment of each ranging block in the hyper block.

Optionally, the second device may further broadcast or multicast third information. The third information may include one or more of the following fields.

Broadcast mode (1 bit): indicating a broadcast mode of the first data packet. For example, when a value of the field is 0, it indicates that the first data packet is periodically broadcast; or when the value of the field is 1, it indicates that the first data packet is aperiodically broadcast. This is also true the other way around. When the value of the field is 1, it indicates that the first data packet is periodically broadcast; or when the value of the field is 0, it indicates that the first data packet is aperiodically broadcast.

Next data packet present (1 bit): indicating whether a next data packet field is present. For example, when a value of the field is 0, it may indicate that the next data packet field is not present; or when the value of the field is 1, it may indicate that the next data packet field is present. This is also true the other way around. When the value of the field is 1, it may indicate that the next data packet field is not present; or when the value of the field is 0, it may indicate that the next data packet field is present.

Next data packet (24 bits): indicating a time interval between a receiving moment or a sending moment of the first data packet and a sending moment or a receiving moment of the next data packet. The time interval may be in RSTU. For example, an interval between the receiving moment or the sending moment of the first data packet and a sending moment or a receiving moment of a second data packet may be indicated. If the next data packet present field is set to 0, this field is not present.

The third information may be broadcast in the following three manners.

Manner 1: The third information is broadcast by using out-of-band signaling (out-of-band signaling, OOB).

For example, the third information may be broadcast by using out-of-band signaling like Bluetooth signaling, Zigbee (Zigbee) signaling, or Wi-Fi signaling.

Manner 2: The third information is broadcast by using in-band signaling.

For example, the third information may be carried in a data packet before the next data packet. For example, third information of the second data packet may be carried in the first data packet. For another example, the third information may be carried in a current data packet. For example, the third information of the second data packet may be carried in the second data packet. For NBA-MMS-UWB ranging, an NB AP is definitely present, but a UWB AP may not be present. The in-band signaling refers to NB signaling. In this case, a current NB AP includes third information of a next NB AP, or may include third information of a current UWB AP. For UWB-only NBA-MMS-UWB ranging, an NB AP is not present, but a UWB AP is definitely present. The in-band signaling refers to UWB signaling. In this case, the current UWB AP includes third information of a next UWB AP.

In embodiments of this application, indexes of a hyper block, a ranging block, and a ranging round all start with "0". Actually, the indexes of the hyper block, the ranging block, and the ranging round may start with any positive integer, for example, start with "1". This is not specifically limited in this application.

The following describes, with reference to accompanying drawings, communication apparatuses for implementing the foregoing methods in embodiments of this application. Therefore, all the foregoing content may be used in the following embodiments. Repeated content is not described again.

FIG. 7 is a block diagram of a communication apparatus 700 according to an embodiment of this application. The communication apparatus 700 may correspondingly implement functions or steps implemented by the first device or the second device in the foregoing method embodiments. The communication apparatus may include a processing unit 710 and a transceiver unit 720. Optionally, a storage unit may be further included. The storage unit may be configured to store instructions (code or a program) and/or data. The processing unit 710 and the transceiver unit 720 may be coupled to the storage unit. For example, the processing unit 710 may read the instructions (the code or the program) and/or the data in the storage unit, to implement a corresponding method. The foregoing units may be independently disposed, or may be partially or completely integrated.

In some possible implementations, the communication apparatus 700 can correspondingly implement behavior and functions of the first device in the foregoing method embodiments. For example, the communication apparatus 700 may be the first device, or may be a component (for example, a chip or a circuit) used in the first device. The transceiver unit 720 may be configured to perform all receiving or sending operations performed by the first device in the embodiment shown in FIG. 4, for example, S401 in the embodiment shown in FIG. 4, and/or another process used to support the technology described in this specification. The processing unit 710 is configured to perform all operations other than the receiving and sending operations performed by the first device in the embodiment shown in FIG. 4, for example, S402 in the embodiment shown in FIG. 4, and/or another process used to support the technology described in this specification.

The transceiver unit 720 is configured to receive a first data packet, where the first data packet includes first information and second information. The first information indicates at least one ranging block occupied by a session corresponding to the first information, the second information indicates that the first information is associated with a plurality of ranging blocks, and the plurality of ranging blocks include the at least one ranging block. The processing unit 710 is configured to determine, on the plurality of ranging blocks based on the first information, the ranging block occupied by the session.

In some possible implementations, the communication apparatus 700 can correspondingly implement behavior and functions of the second device in the foregoing method embodiments. For example, the communication apparatus 700 may be the second device, or may be a component (for example, a chip or a circuit) used in the second device. The transceiver unit 720 may be configured to perform all receiving or sending operations performed by the second device in the embodiment shown in FIG. 4, for example, S401 in the embodiment shown in FIG. 4, and/or another process used to support the technology described in this specification. The processing unit 710 is configured to perform all operations other than the receiving and sending operations performed by the second device in the embodiment shown in FIG. 4, and/or another process used to support the technology described in this specification.

The processing unit 710 is configured to generate a first data packet, where the first data packet includes first information and second information. The first information indicates at least one ranging block occupied by a session corresponding to the first information, the second information indicates that the first information is associated with a plurality of ranging blocks, and the plurality of ranging blocks include the at least one ranging block. The transceiver unit 720 is configured to send the first data packet.

For operations performed by the processing unit 710 and the transceiver unit 720, refer to the related descriptions in the foregoing method embodiments.

It should be understood that the processing unit 710 in embodiments of this application may be implemented by a processor or a processor-related circuit component, and the transceiver unit 720 may be implemented by a transceiver, a transceiver-related circuit component, or a communication interface.

Based on a same concept, as shown in FIG. 8, an embodiment of this application provides a communication apparatus 800. The communication apparatus 800 includes a processor 810. Optionally, the communication apparatus 800 may further include a memory 820, configured to store instructions executed by the processor 810, or store input data needed by the processor 810 to run instructions, or store data generated after the processor 810 runs instructions. The processor 810 may implement the methods shown in the foregoing method embodiments based on the instructions stored in the memory 820.

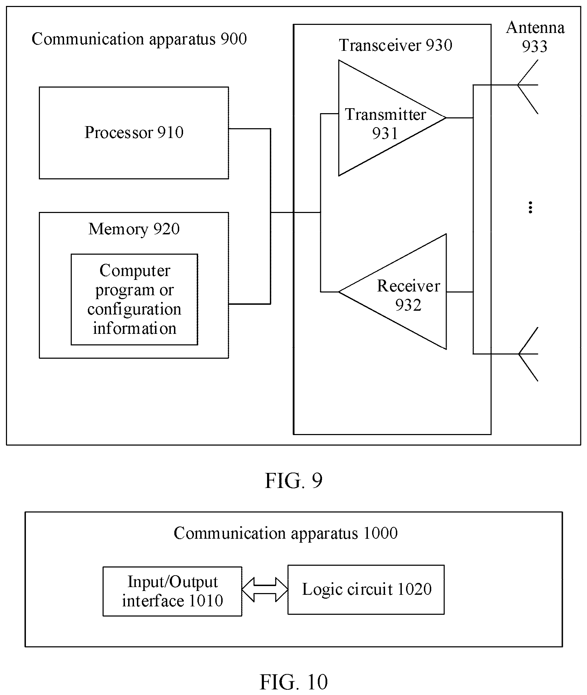

Based on a same concept, as shown in FIG. 9, an embodiment of this application provides a communication apparatus 900. The communication apparatus 900 may be a chip or a chip system. Optionally, in this embodiment of this application, the chip system may include a chip, or may include a chip and another discrete device.

The communication apparatus 900 may include at least one processor 910. The processor 910 is coupled to a memory. Optionally, the memory may be located inside the apparatus, or may be located outside the apparatus. For example, the communication apparatus 900 may further include at least one memory 920. The memory 920 stores a necessary computer program, configuration information, a computer program or instructions, and/or data for implementing any one of the foregoing embodiments. The processor 910 may execute the computer program stored in the memory 920, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 910 may cooperate with the memory 920. In this embodiment of this application, a specific connection medium between a transceiver 930, the processor 910, and the memory 920 is not limited.

The communication apparatus 900 may further include the transceiver 930, and the communication apparatus 900 may exchange information with another device through the transceiver 930. The transceiver 930 may be a circuit, a bus, a transceiver, or any other apparatus that may be configured to exchange information, or is referred to as a signal transceiver unit. As shown in FIG. 9, the transceiver 930 includes a transmitter 931, a receiver 932, and an antenna 933. In addition, when the communication apparatus 900 is a chip-type apparatus or a circuit, the transceiver in the communication apparatus 900 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 900 may be used in a first device. Specifically, the communication apparatus 900 may be the first device, or may be an apparatus that can support the first device in implementing the functions of the first device in any one of the foregoing embodiments. The memory 920 stores a necessary computer program, a computer program or instructions, and/or data for implementing the functions of the first device in any one of the foregoing embodiments. The processor 910 may execute the computer program stored in the memory 920, to complete the method performed by the first device in any one of the foregoing embodiments.

In a possible implementation, the communication apparatus 900 may be used in a second device. Specifically, the communication apparatus 900 may be the second device, or may be an apparatus that can support the second device in implementing the functions of the second device in any one of the foregoing embodiments. The memory 920 stores a necessary computer program, a computer program or instructions, and/or data for implementing the functions of the second device in any one of the foregoing embodiments. The processor 910 may execute the computer program stored in the memory 920, to complete the method performed by the second device in any one of the foregoing embodiments.

The communication apparatus 900 provided in this embodiment may be used in a first device to complete the method performed by the first device, or may be used in a second device to complete the method performed by the second device. Therefore, for technical effects that can be achieved by this embodiment, refer to the foregoing method embodiments. Details are not described herein again.

In embodiments of this application, the processor may be a general-purpose processor, a digital signal processor, an application-specific integrated circuit, a field-programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 10. Based on the foregoing embodiments, an embodiment of this application further provides another communication apparatus 1000, including an input/output interface 1010 and a logic circuit 1020. The input/output interface 1010 is configured to receive code instructions and transmit the code instructions to the logic circuit 1020. The logic circuit 1020 is configured to run the code instructions to perform the method performed by the first device or the second device in any one of the foregoing embodiments.

The following describes in detail an operation performed by the communication apparatus used in the first device or the second device.

In an optional implementation, the communication apparatus 1000 may be used in the first device, to perform the method performed by the first device. For example, the method may be specifically the method performed by the first device in the embodiment shown FIG. 4.

The input/output interface 1010 is configured to receive a first data packet, where the first data packet includes first information and second information. The first information indicates at least one ranging block occupied by a session corresponding to the first information, the second information indicates that the first information is associated with a plurality of ranging blocks, and the plurality of ranging blocks include the at least one ranging block. The logic circuit 1020 is configured to determine, on the plurality of ranging blocks based on the first information, the ranging block occupied by the session.

In an optional implementation, the communication apparatus 1000 may be used in the second device, to perform the method performed by the second device. For example, the method may be specifically the method performed by the second device in the embodiment shown FIG. 4.

The logic circuit 1020 is configured to generate a first data packet, where the first data packet includes first information and second information. The first information indicates at least one ranging block occupied by a session corresponding to the first information, the second information indicates that the first information is associated with a plurality of ranging blocks, and the plurality of ranging blocks include the at least one ranging block. The input/output interface 1010 is configured to send the first data packet.

The communication apparatus 1000 provided in this embodiment may be used in the first device to complete the method performed by the first device, or may be used in the second device to complete the method performed by the second device. Therefore, for technical effects that can be achieved by this embodiment, refer to the foregoing method embodiments. Details are not described herein again.

Based on the foregoing embodiments, an embodiment of this application further provides a communication system. The communication system includes at least one communication apparatus used in a first device and at least one communication apparatus used in a second device. For technical effects that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the first device or the method performed by the second device in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement the functions of the communication apparatuses in FIG. 7 to FIG. 10, an embodiment of this application further provides a chip, including a processor, configured to support the communication apparatuses in implementing the functions of the first device or the second device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that the modifications and variations fall within the scope of protection defined by the following claims and their equivalent technologies.

## Claims

1. An information transmission method, comprising:
receiving a first data packet, wherein the first data packet comprises first information and third information, the first information indicates at least one ranging block occupied by a session corresponding to the first information, and the third information indicates one or more of the following: indication information indicating whether the first data packet is periodically broadcast, and a time interval between a receiving moment of the third information and a second data packet, wherein a sending moment of the second data packet is later than a sending moment of the first data packet; and
determining, on the plurality of ranging blocks based on the first information, the ranging block occupied by the session.

2. An information transmission method, comprising:
generating a first data packet, wherein the first data packet comprises first information and third information, the first information indicates at least one ranging block occupied by a session corresponding to the first information, and the third information indicates one or more of the following: indication information indicating whether the first data packet is periodically broadcast, and a time interval between a receiving moment of the third information and a second data packet, wherein a sending moment of the second data packet is later than a sending moment of the first data packet; and
sending the first data packet.

3. The method according to claim 1 or 2, wherein the first information comprises configuration information of multi-millisecond ultra-wideband MMS-UWB ranging, and the configuration information comprises one or more of the following: a quantity of repetitions of a multi-millisecond ultra-wideband sequence MMRS, a quantity of ranging sequence fragments RSFs, a quantity of ranging integrity fragments RIFs, an MMRS sequence index, and a gap size, wherein the quantity of repetitions of the MMRS indicates a quantity of repetitions of an MMRS sequence used for the session, the MMRS sequence index indicates an index of the MMRS sequence used for the session, and the gap size indicates a gap size between MMRS sequences used for the session.

4. The method according to any one of claims 1 to 3, wherein the first data packet is aperiodically transmitted, and the sending moment of the first data packet is determined based on a start moment of the at least one ranging block.

5. A communication apparatus, comprising a processing unit and a transceiver unit, wherein
the transceiver unit is configured to receive a first data packet, wherein the first data packet comprises first information and third information, the first information indicates at least one ranging block occupied by a session corresponding to the first information, and the third information indicates one or more of the following: indication information indicating whether the first data packet is periodically broadcast, and a time interval between a receiving moment of the third information and a second data packet, wherein a sending moment of the second data packet is later than a sending moment of the first data packet; and
the processing unit is configured to determine, on the plurality of ranging blocks based on the first information, the ranging block occupied by the session.

6. A communication apparatus, comprising a processing unit and a transceiver unit, wherein
the processing unit is configured to generate a first data packet, wherein the first data packet comprises first information and third information, the first information indicates at least one ranging block occupied by a session corresponding to the first information, and the third information indicates one or more of the following: indication information indicating whether the first data packet is periodically broadcast, and a time interval between a receiving moment of the third information and a second data packet, wherein a sending moment of the second data packet is later than a sending moment of the first data packet; and
the transceiver unit is configured to send the first data packet.

7. The apparatus according to claim 5 or 6, wherein the first information comprises configuration information of multi-millisecond ultra-wideband MMS-UWB ranging, and the configuration information comprises one or more of the following: a quantity of repetitions of a multi-millisecond ultra-wideband sequence MMRS, a quantity of ranging sequence fragments RSFs, a quantity of ranging integrity fragments RIFs, an MMRS sequence index, and a gap size, wherein the quantity of repetitions of the MMRS indicates a quantity of repetitions of an MMRS sequence used for the session, the MMRS sequence index indicates an index of the MMRS sequence used for the session, and the gap size indicates a gap size between MMRS sequences used for the session.

8. The apparatus according to any one of claims 5 to 7, wherein the first data packet is aperiodically transmitted, and the sending moment of the first data packet is determined based on a start moment of the at least one ranging block.

9. A communication apparatus, comprising a processor and a memory, wherein
the memory is configured to store a computer program or instructions; and
the processor is configured to execute the computer program or the instructions in the memory, so that the apparatus performs the method according to claim 1, 3, or 4, or the apparatus performs the method according to any one of claims 2 to 4.

10. A computer-readable storage medium, wherein the computer-readable storage medium stores computer-executable instructions, and when the computer-executable instructions are invoked by an electronic apparatus, the electronic apparatus is enabled to perform the method according to claim 1, 3, or 4, or the electronic apparatus is enabled to perform the method according to any one of claims 2 to 4.

11. A chip system, comprising a communication interface and a processor, wherein
the communication interface is configured to input and/or output signaling or data; and
the processor is configured to execute a computer-executable program, so that a device on which the chip system is installed performs the method according to any one of claims 1 to 4.

12. A computer program product, wherein the computer program product comprises computer program code or instructions, and when the computer program code or the instructions are run, the method according to claim 1, 3, or 4 is performed, or the method according to any one of claims 2 to 4 is performed.
